# EUROPEAN PATENT APPLICATION

(11) **EP 4 664 989 A1**
(43) Date of publication of application: **17.12.2025**
(21) Application number: 24756073.3
(22) Date of filing: 04.02.2024
(51) Int. Cl.: H04W 28/16

(54) **RADIO BEARER CONFIGURATION METHOD, DEVICE, AND READABLE STORAGE MEDIUM**

(30) Priority: 17.02.2023 CN 202310192895; 27.03.2023 CN 202310345132
(71) Applicant: Huawei Technologies Co., Ltd., Shenzhen, Guangdong 518129 (CN)
(72) Inventor: YE, Kuan, Shenzhen, Guangdong 518129 (CN); LI, Xiangyu, Shenzhen, Guangdong 518129 (CN); PENG, Wenjie, Shenzhen, Guangdong 518129 (CN); WANG, Rui, Shenzhen, Guangdong 518129 (CN)
(74) Representative: Pfenning, Meinig & Partner mbB
(86) International application number: PCT/CN2024/075823
(87) International publication number: WO 2024/169699

(57) **Abstract**

This application relates to the field of communication technologies, and provides a radio bearer configuration method, a device, and a readable storage medium. The radio bearer configuration method is applied to a first terminal device, and includes: obtaining configuration information, where the configuration information includes first configuration information and second configuration information, the first configuration information and the second configuration information include first association information, and the first association information indicates an association relationship between the first configuration information and the second configuration information; and determining, based on the first association information, a first channel corresponding to a first radio bearer, where the first radio bearer is a radio bearer that is between the first terminal device and a second terminal device and that is determined based on the first configuration information, and the first channel is determined based on the second configuration information and is used to transmit the first radio bearer through a first communication interface. The first terminal device sends data to the second terminal device via a relay terminal device. Radio bearer configuration is implemented, and communication is ensured.

## Description

This application claims priorities to Chinese Patent Application No. 202310192895.2, filed with the China National Intellectual Property Administration on February 17, 2023 and entitled "RADIO BEARER CONFIGURATION METHOD, DEVICE, AND READABLE STORAGE MEDIUM", and to Chinese Patent Application No. 202310345132.7, filed with the China National Intellectual Property Administration on March 27, 2023 and entitled "RADIO BEARER CONFIGURATION METHOD, DEVICE, AND READABLE STORAGE MEDIUM", both of which are incorporated herein by reference in their entireties.

### TECHNICAL FIELD

Embodiments of this application relate to the field of communication technologies, and in particular, to a radio bearer configuration method, a device, and a readable storage medium.

### BACKGROUND

In a wireless communication system, data communication may be performed between user equipments (user equipment, UE) via a network device, or communication may be directly performed between UEs without a network device. A communication link between UEs may be referred to as a sidelink (sidelink, SL). Two UEs that perform SL communication may be respectively referred to as source UE (source UE) and target UE (target UE).

To ensure communication, the source UE and the target UE need to have a consistent sidelink radio bearer (sidelink radio bearer, SLRB) configuration, to control data sending or receiving.

With development of communication technologies and diversified requirements of communication scenarios, coverage enhancement or capacity increase may be implemented between the source UE and the target UE via relay UE (referred to as relay UE). Such a communication mode is referred to as UE-to-UE relay communication. In a UE-to-UE relay architecture, data sent by the source UE to the target UE needs to pass through two paths: a path 1 (link 1) between the source UE and the relay UE, and a path 2 (link 2) between the relay UE and the target UE.

In a UE-to-UE relay scenario, how to determine radio bearer configuration to ensure communication needs to be urgently resolved.

### SUMMARY

This application provides a radio bearer configuration method, a device, and a readable storage medium, to implement radio bearer configuration in a UE to UE relay scenario.

According to a first aspect, this application provides a radio bearer configuration method, applied to a first terminal device. The method includes: obtaining configuration information, where the configuration information includes first configuration information and second configuration information, the first configuration information and the second configuration information include first association information, and the first association information indicates an association relationship between the first configuration information and the second configuration information; and determining, based on the first association information, a first channel corresponding to a first radio bearer, where the first radio bearer is a radio bearer that is between the first terminal device and a second terminal device and that is determined based on the first configuration information, the first channel is determined based on the second configuration information and is used to transmit the first radio bearer through a first communication interface, the first communication interface is a communication interface between the first terminal device and a relay terminal device, and the first terminal device sends data to the second terminal device via the relay terminal device.

In this manner, the first terminal device sends the data to the second terminal device via the relay terminal device. The first terminal device is a transmit device, the second terminal device is a receive device, and the relay terminal device is a relay device. The first terminal device may obtain the configuration information, including the first configuration information and the second configuration information. The first configuration information is an end-to-end configuration between the transmit device and the receive device, and is used to determine the first radio bearer between the transmit device and the receive device. The second configuration information is a configuration on a link 1 between the transmit device and the relay device, and is used to determine the first channel on the link 1 between the transmit device and the relay device. The first channel is used to transmit the first radio bearer through the communication interface on the link 1. Because the first configuration information and the second configuration information include the first association information, the first configuration information and the second configuration information are associated. In this way, when sending data, the first terminal device can determine that the end-to-end first radio bearer is transmitted on the link 1 over the first channel. This implements sending and ensures communication.

In a possible design, the first configuration information and the second configuration information are determined based on first quality of service QoS information and/or second QoS information, the first QoS information is a QoS profile corresponding to a first QoS flow, the first QoS flow is a QoS flow between the first terminal device and the second terminal device, and the second QoS information is a QoS profile that is determined based on the first QoS information and that needs to be met on the first communication interface.

In this manner, the first configuration information is determined based on the end-to-end first QoS information between the first terminal device and the second terminal device, and the second configuration information is determined based on the second QoS information on the link 1 between the first terminal device and the relay terminal device. This meets QoS between the first terminal device and the second terminal device and QoS between the first terminal device and the relay terminal device, and ensures service communication quality.

In a possible design, the second QoS information is a QoS profile that the first radio bearer needs to meet on the first communication interface.

In this manner, the second QoS information is the QoS information at an RB granularity, and an RLC bearer configuration on the link 1 is obtained based on the second QoS information at the RB granularity on the link 1 between the first terminal device and the relay terminal device. This meets the QoS between the first terminal device and the relay terminal device, and ensures the service communication quality.

In a possible design, the method further includes: sending a first message to a first network device, where the first message includes at least the first QoS information and first indication information, and the first indication information indicates that the first terminal device communicates with the second terminal device via the relay terminal device.

In this manner, the first terminal device is in a connected mode, the first terminal device reports at least the first QoS information to the first network device, and the first network device determines the first configuration information and the second configuration information based on at least the first QoS information. In addition, the first terminal device further reports the first indication information to the first network device, to ensure, based on the first indication information, that the first network device can identify a UE to UE relay scenario, so as to perform the radio bearer configuration method provided in this application, and avoid a failure in radio bearer configuration caused by scenario misjudgment.

In a possible design, the first indication information includes a device identifier of the relay terminal device, the first QoS information, and a device identifier, of the second terminal device, associated with the first QoS information.

In this manner, the first terminal device reports the first QoS information. Subsequently, the first network device completes QoS split, and determines the configuration information based on the first QoS information and the second QoS information that are obtained through QoS split. The first QoS information is associated with the device identifier of the second terminal device, which indicates that the second terminal device is the receive device. However, the device identifier of the relay terminal device is not associated with QoS information, which indicates the UE to UE relay scenario.

In a possible design, the first indication information further includes the second QoS information and a device identifier, of the relay terminal device, associated with the second QoS information.

In this manner, the first terminal device reports the first QoS information and the second QoS information, the first network device does not need to perform QoS split, and the first terminal device, the relay terminal device, or a serving network device of the relay terminal device performs QoS split. The first QoS information is associated with the device identifier of the second terminal device, and the second QoS information is associated with the device identifier of the relay terminal device. The device identifier of the relay terminal device is carried to indicate the UE to UE relay scenario.

In a possible design, the first indication information includes the second QoS information, a device identifier, of the relay terminal device, associated with the second QoS information, and a terminal device list, where the terminal device list includes the first QoS information and a device identifier, of the second terminal device, associated with the first QoS information.

In this manner, the first terminal device reports the first QoS information and the second QoS information, the first network device does not need to perform QoS split, and the first terminal device, the relay terminal device, or a serving network device of the relay terminal device performs QoS split. The relay terminal device and the second terminal device are explicitly indicated based on the terminal device list, and the UE to UE relay scenario is indicated.

In a possible design, the first message further includes at least one of the following: the second QoS information, third QoS information, or an identifier of the first QoS flow associated with the relay terminal device and an identifier of the first QoS flow associated with the second terminal device, where the third QoS information is a QoS profile that is determined based on the first QoS information and that needs to be met on a second communication interface, the second communication interface is a communication interface between the relay terminal device and the second terminal device, and the identifier of the first QoS flow associated with the relay terminal device is the same as the identifier of the first QoS flow associated with the second terminal device.

In this manner, when the first message includes the second QoS information, the first network device does not need to perform QoS split, and the first terminal device, the relay terminal device, or a serving network device of the relay terminal device performs QoS split. The first network device receives the first QoS information and the second QoS information, and determines the configuration information.

When the first message includes the third QoS information, the first network device is expected to determine fourth QoS information based on the third QoS information. The third QoS information is the QoS information at a flow granularity on a link 2 between the relay terminal device and the second terminal device, and the fourth QoS information is QoS information at an RB granularity on the link 2 between the relay terminal device and the second terminal device. Subsequently, the relay terminal device or the serving network device of the relay terminal device can directly determine a configuration on the link 2 between the relay terminal device and the second terminal device based on the fourth QoS information.

When the first message includes the identifier of the first QoS flow associated with the relay terminal device and the identifier of the first QoS flow associated with the second terminal device, and the identifiers are the same, a correspondence between the first QoS information and the second QoS information is associated based on the same identifier of the first QoS flow. This implementation is simple.

In a possible design, the method further includes: performing QoS split on the first QoS information, to obtain the second QoS information and/or third QoS information; or receiving the second QoS information and/or third QoS information sent by the relay terminal device, where the third QoS information is a QoS profile that is determined based on the first QoS information and that needs to be met on a second communication interface, and the second communication interface is a communication interface between the relay terminal device and the second terminal device.

In this manner, the first terminal device may perform QoS split, and this may be applicable to a case in which the first terminal device is in a connected mode, an idle/inactive mode, or an OoC mode. Alternatively, the relay terminal device or a serving network device of the relay terminal device may perform QoS split to obtain the second QoS information and/or the third QoS information.

In a possible design, the method further includes: sending first information to the second terminal device via the relay terminal device, where the first information includes the first association information.

In a possible design, the method further includes: sending fourth QoS information or a mapping relationship between the first QoS flow and the first radio bearer to the relay terminal device, where the first QoS flow is the QoS flow between the first terminal device and the second terminal device; and the fourth QoS information is a QoS profile that the first radio bearer needs to meet on the second communication interface, and the second communication interface is the communication interface between the relay terminal device and the second terminal device.

In this manner, when the fourth QoS information is sent to the relay terminal device, subsequently, the relay terminal device or the serving network device of the relay terminal device can directly determine the configuration on the link 2 between the relay terminal device and the second terminal device based on the fourth QoS information. When the mapping relationship between the first QoS flow and the first radio bearer is sent to the relay terminal device, subsequently, the relay terminal device or the serving network device of the relay terminal device can determine the fourth QoS information based on the mapping relationship, to determine the configuration on the link 2 between the relay terminal device and the second terminal device.

In a possible design, the first association information is any one of the following: an index of a sidelink configuration, an identifier obtained through mapping based on an index of a sidelink configuration, a sidelink radio bearer SLRB identifier, or a radio link control RLC channel identifier.

In this manner, the first configuration information is determined based on the first QoS information, and the second configuration information is determined based on the second QoS information at the RB granularity. The first configuration information and the second configuration information include a first identifier, and the first identifier includes the index of the sidelink configuration, the identifier obtained through mapping based on the index of the sidelink configuration, the SLRB identifier, or the RLC channel identifier. The first configuration information and the second configuration information can be associated based on the first identifier. This implements radio bearer configuration and ensures the communication.

In a possible design, the first association information is the mapping relationship between the first QoS flow and the first radio bearer.

In this manner, the first configuration information is determined based on the first QoS information, and the second configuration information is determined based on the second QoS information at the flow granularity. The first configuration information and the second configuration information have the same mapping relationship between the first QoS flow and the first radio bearer. Therefore, the first configuration information and the second configuration information can be associated based on the mapping relationship between the first QoS flow and the first radio bearer. This ensures the communication.

In a possible design, the first network device may map, to a same first radio bearer, first QoS flows respectively associated with at least two second terminal devices. In this case, the first terminal device needs to establish a PDCP entity corresponding to each second terminal device. In other words, a plurality of PDCP entities are established for the first radio bearer, and these different PDCP entities are mapped to a same RLC entity.

According to a second aspect, this application provides a radio bearer configuration method, applied to a first network device. The method includes:
receiving a first message sent by a first terminal device;
determining configuration information based on the first message, where the configuration information includes first configuration information and second configuration information, the first configuration information and the second configuration information include first association information, the first association information indicates an association relationship between the first configuration information and the second configuration information, the first configuration information is used to determine a first radio bearer, the first radio bearer is a radio bearer between the first terminal device and a second terminal device, the second configuration information is used to determine a first channel, the first channel is used to transmit the first radio bearer through a first communication interface, the first communication interface is a communication interface between the first terminal device and a relay terminal device, and the first terminal device sends data to the second terminal device via the relay terminal device; and
sending the configuration information to the first terminal device.

In this manner, the first terminal device is in a connected mode, the first terminal device reports related QoS information to the first network device, and the first network device determines the first configuration information and the second configuration information. In addition, the first terminal device further reports first indication information to the first network device, to ensure, based on the first indication information, that the first network device can identify a UE to UE relay scenario, so as to perform the radio bearer configuration method provided in this application, and avoid a failure in radio bearer configuration caused by scenario misjudgment.

In a possible design, the first configuration information and the second configuration information are determined based on first quality of service QoS information and/or second QoS information.

The first QoS information is a QoS profile corresponding to a first QoS flow, and the first QoS flow is a QoS flow between the first terminal device and the second terminal device.

The second QoS information is a QoS profile that is determined based on the first QoS information and that needs to be met on the first communication interface.

In a possible design, the second QoS information is a QoS profile that the first radio bearer needs to meet on the first communication interface.

In a possible design, the first message includes at least the first QoS information and first indication information, and the first indication information indicates that the first terminal device communicates with the second terminal device via the relay terminal device.

In a possible design, the first indication information includes:
a device identifier of the relay terminal device, the first QoS information, and a device identifier, of the second terminal device, associated with the first QoS information.

In a possible design, the first indication information further includes:
the second QoS information and a device identifier, of the relay terminal device, associated with the second QoS information.

In a possible design, the first indication information includes:
the second QoS information, a device identifier, of the relay terminal device, associated with the second QoS information, and a terminal device list, where the terminal device list includes the first QoS information and a device identifier, of the second terminal device, associated with the first QoS information.

In a possible design, the first message further includes at least one of the following:
the second QoS information, third QoS information, or an identifier of the first QoS flow associated with the relay terminal device and an identifier of the first QoS flow associated with the second terminal device.

The third QoS information is a QoS profile that is determined based on the first QoS information and that needs to be met on a second communication interface, and the second communication interface is a communication interface between the relay terminal device and the second terminal device.

The identifier of the first QoS flow associated with the relay terminal device is the same as the identifier of the first QoS flow associated with the second terminal device.

In a possible design, the first association information is any one of the following: an index of a sidelink configuration, an identifier obtained through mapping based on an index of a sidelink configuration, a sidelink radio bearer SLRB identifier, or a radio link control RLC channel identifier.

In a possible design, the first association information is a mapping relationship between the first QoS flow and the first radio bearer.

According to a third aspect, this application provides a radio bearer configuration method, applied to a relay terminal device. The method includes:
receiving second information sent by a first terminal device, where the second information includes first association information, the first association information indicates an association relationship between first configuration information and second configuration information, the first configuration information is used to determine a first radio bearer, the first radio bearer is a radio bearer between the first terminal device and a second terminal device, the second configuration information is used to determine a first channel, the first channel is used to transmit the first radio bearer through a first communication interface, the first communication interface is a communication interface between the first terminal device and the relay terminal device, and the first terminal device sends data to the second terminal device via the relay terminal device; and
receiving, based on the second information, the information sent by the first terminal device.

In a possible design, the method further includes:
obtaining third configuration information, where the third configuration information includes the first association information, and the first association information further indicates an association relationship between the first configuration information and the third configuration information; and
determining, based on the first association information, a second channel corresponding to the first radio bearer, where the second channel is determined based on the third configuration information and is used to transmit the first radio bearer through a second communication interface, and the second communication interface is a communication interface between the relay terminal device and the second terminal device.

In this manner, the first association information is a first identifier, and the first identifier indicates the first radio bearer. In addition, the second channel can be determined based on the third configuration information. Therefore, a correspondence between the first radio bearer and the second channel can be determined based on the first identifier. When sending data to the second terminal device, the relay terminal device can determine that the end-to-end first radio bearer is transmitted on a link 2 over the second channel. This implements sending and ensures communication.

In a possible design, the first association information is any one of the following: an index of a sidelink configuration, an identifier obtained through mapping based on an index of a sidelink configuration, a sidelink radio bearer SLRB identifier, or a radio link control RLC channel identifier.

In a possible design, the third configuration information is determined based on fourth quality of service QoS information, and the fourth QoS information is a QoS profile that the first radio bearer needs to meet on the second communication interface.

In a possible design, the method further includes:
sending a second message to a second network device, where the second message includes the fourth QoS information or a mapping relationship between a first QoS flow and the first radio bearer, and the first QoS flow is a QoS flow between the first terminal device and the second terminal device.

In this manner, the relay terminal device is in a connected mode, the relay terminal device reports related QoS information to the second network device, and the second network device determines the third configuration information. The relay terminal device obtains the third configuration information. This implements sending to the second terminal device and ensures the communication.

In a possible design, the method further includes:
receiving the fourth QoS information or the mapping relationship between the first QoS flow and the first radio bearer that is sent by the first terminal device.

In a possible design, the second message further includes third QoS information, and the third QoS information is a QoS profile that the first QoS flow needs to meet on the second communication interface.

According to a fourth aspect, this application provides a radio bearer configuration method, applied to a second network device. The method includes:
receiving a second message sent by a relay terminal device;
determining third configuration information based on the second message, where the third configuration information includes first association information, the first association information indicates an association relationship between first configuration information and the third configuration information, the first configuration information is used to determine a first radio bearer, the first radio bearer is a radio bearer between a first terminal device and a second terminal device, the third configuration information is used to determine a second channel, the second channel is used to transmit the first radio bearer through a second communication interface, the second communication interface is a communication interface between the relay terminal device and the second terminal device, and the first terminal device sends data to the second terminal device via the relay terminal device; and
sending the third configuration information to the relay terminal device.

In this manner, the relay terminal device is in a connected mode, the relay terminal device reports related QoS information to the second network device, and the second network device determines the third configuration information. The third configuration information includes the first association information, and the first association information is a first identifier that indicates the first radio bearer. The third configuration information is used to implement sending from the relay terminal device to the second terminal device and ensures communication.

In a possible design, the first association information is any one of the following: an index of a sidelink configuration, an identifier obtained through mapping based on an index of a sidelink configuration, a sidelink radio bearer SLRB identifier, or a radio link control RLC channel identifier.

In a possible design, the third configuration information is determined based on fourth quality of service QoS information, and the fourth QoS information is a QoS profile that the first radio bearer needs to meet on the second communication interface.

In a possible design, the second message includes the fourth QoS information or a mapping relationship between a first QoS flow and the first radio bearer, and the first QoS flow is a QoS flow between the first terminal device and the second terminal device.

In a possible design, the second message further includes third QoS information, and the third QoS information is a QoS profile that the first QoS flow needs to meet on the second communication interface.

According to a fifth aspect, this application provides a radio bearer configuration method, applied to a relay terminal device. The method includes: obtaining first association information; and determining, based on the first association information, a second channel corresponding to a first radio bearer, where the first radio bearer is a radio bearer between a first terminal device and a second terminal device, the second channel is used to transmit the first radio bearer through a second communication interface, the second communication interface is a communication interface between the relay terminal device and the second terminal device, and the first terminal device sends data to the second terminal device via the relay terminal device.

In this manner, the first association information is a first identifier, and the first identifier indicates the first radio bearer, and a corresponding between the first radio bearer and the second channel can be determined based on the first identifier. Therefore, when sending data to the second terminal device, the relay terminal device can determine that the end-to-end first radio bearer is transmitted on a link 2 over the second channel. This implements sending and ensures communication.

In a possible design, obtaining the first association information includes: obtaining third configuration information, where the third configuration information includes the first association information, and the third configuration information is used to determine the second channel.

In this manner, the relay terminal device obtains the third configuration information, and obtains the first association information in the third configuration information. The first association information is the first identifier that indicates the first radio bearer. The third configuration information is used to determine the second channel. This implements sending from the relay terminal device to the second terminal device and ensures communication.

In a possible design, the first association information is any one of the following: an index of a sidelink configuration, an identifier obtained through mapping based on an index of a sidelink configuration, a sidelink radio bearer SLRB identifier, or a radio link control RLC channel identifier.

In a possible design, the third configuration information is determined based on fourth quality of service QoS information, and the fourth QoS information is a QoS profile that the first radio bearer needs to meet on the second communication interface.

In a possible design, the method further includes: sending a second message to a second network device, where the second message includes the fourth QoS information or a mapping relationship between a first QoS flow and the first radio bearer, and the first QoS flow is a QoS flow between the first terminal device and the second terminal device.

In this manner, the relay terminal device is in a connected mode, the relay terminal device reports related QoS information to the second network device, and the second network device determines the third configuration information. The relay terminal device obtains the third configuration information. This implements sending to the second terminal device and ensures the communication.

In a possible design, the method further includes: receiving the fourth QoS information or the mapping relationship between the first QoS flow and the first radio bearer that is sent by the first terminal device.

In a possible design, the second message further includes third QoS information, and the third QoS information is a QoS profile that the first QoS flow needs to meet on the second communication interface.

According to a sixth aspect, this application provides a radio bearer configuration method, applied to a second network device. The method includes: receiving a second message sent by a relay terminal device; determining third configuration information based on the second message, where the third configuration information includes first association information, the third configuration information is used to determine a second channel, the second channel is used to transmit a first radio bearer through a second communication interface, the second communication interface is a communication interface between the relay terminal device and a second terminal device, the first radio bearer is a radio bearer between a first terminal device and the second terminal device, and the first terminal device sends data to the second terminal device via the relay terminal device; and sending the third configuration information to the relay terminal device.

In this manner, the relay terminal device is in a connected mode, the relay terminal device reports related QoS information to the second network device, and the second network device determines the third configuration information. The third configuration information includes the first association information, and the first association information is a first identifier that indicates the first radio bearer. The third configuration information is used to implement sending from the relay terminal device to the second terminal device and ensures communication.

In a possible design, the first association information is any one of the following: an index of a sidelink configuration, an identifier obtained through mapping based on an index of a sidelink configuration, a sidelink radio bearer SLRB identifier, or a radio link control RLC channel identifier.

In a possible design, the third configuration information is determined based on fourth quality of service QoS information, and the fourth QoS information is a QoS profile that the first radio bearer needs to meet on the second communication interface.

In a possible design, the second message includes the fourth QoS information or a mapping relationship between a first QoS flow and the first radio bearer, and the first QoS flow is a QoS flow between the first terminal device and the second terminal device.

In a possible design, the second message further includes third QoS information, and the third QoS information is a QoS profile that the first QoS flow needs to meet on the second communication interface.

According to a seventh aspect, an apparatus is provided, including units or means (means) configured to perform steps according to any one of the foregoing aspects.

According to an eighth aspect, a communication apparatus is provided. The communication apparatus includes a processor, a memory, and a transceiver. The transceiver is configured to communicate with another device. The processor is configured to read instructions in the memory, and enable, based on the instructions, the communication apparatus to perform the method according to any one of the foregoing aspects.

According to a ninth aspect, a program is provided. When executed by a processor, the program is used to perform the method according to any one of the foregoing aspects.

According to a tenth aspect, a computer-readable storage medium is provided. The computer-readable storage medium stores instructions, and when the instructions are run on a computer or a processor, the method according to any one of the foregoing aspects is implemented.

According to an eleventh aspect, a program product is provided. The program product includes a computer program, the computer program is stored in a readable storage medium, and at least one processor of a device may read the computer program from the readable storage medium, and the at least one processor executes the computer program to enable the device to perform the method according to any of the foregoing aspects.

According to a twelfth aspect, a chip system is provided. The chip system includes a processor, configured to perform the method according to any one of the foregoing aspects. In a possible design, the chip system further includes a memory, configured to store program instructions and/or data. The chip system may include a chip, or may include a chip and another discrete component.

### BRIEF DESCRIPTION OF DRAWINGS

FIG. 1 is a diagram of a scenario of SL communication according to an embodiment of this application;
FIG. 2 is a diagram of an architecture of a wireless communication system in which two UEs perform sidelink communication according to an embodiment of this application;
FIG. 3A and FIG. 3B are diagrams of protocol stacks for sidelink communication performed by two UEs according to an embodiment of this application;
FIG. 4 is a flowchart of a radio bearer configuration method in sidelink communication performed by two UEs according to an embodiment of this application;
FIG. 5 is a diagram of an architecture of a wireless communication system in a UE to UE relay scenario according to an embodiment of this application;
FIG. 6 is a diagram of a protocol stack in a UE to UE relay scenario according to an embodiment of this application;
FIG. 7 is a flowchart of a radio bearer configuration method according to an embodiment of this application;
FIG. 8 is another flowchart of a radio bearer configuration method according to an embodiment of this application;
FIG. 9 is another flowchart of a radio bearer configuration method according to an embodiment of this application;
FIG. 10 is another flowchart of a radio bearer configuration method according to an embodiment of this application;
FIG. 11 is another flowchart of a radio bearer configuration method according to an embodiment of this application;
FIG. 12 is a diagram of a structure of a possible communication apparatus according to an embodiment of this application;
FIG. 13 is a diagram of a structure of a terminal device according to an embodiment of this application;
FIG. 14 is a diagram of a structure of a network device according to an embodiment of this application; and
FIG. 15 is a diagram of QoS information in a UE to UE relay scenario according to an embodiment of this application.

### DESCRIPTION OF EMBODIMENTS

To make objectives, technical solutions, and advantages of this application clearer, the following further describes embodiments of this application in detail with reference to accompanying drawings. Specific operation methods, function descriptions, and the like in method embodiments may also be applied to apparatus embodiments or system embodiments.

A radio bearer configuration method provided in this application is applicable to a radio bearer configuration process in sidelink communication.

To facilitate understanding of this application, concepts in this application are described first.

### 1. SL (sidelink) communication

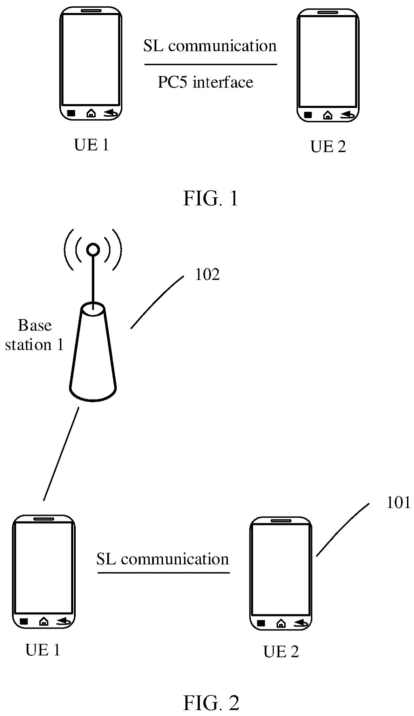

Communication may be directly performed between UEs without a network device, which is referred to as sidelink communication. An interface between the UEs is referred to as a PC5 interface. A link between the UEs is referred to as a sidelink. For example, FIG. 1 is a diagram of a scenario of SL communication according to an embodiment of this application. FIG. 1 includes two UEs, which are identified as UE 1 and UE 2. The UE 1 and the UE 2 perform SL communication.

An application scenario of the sidelink communication may be vehicle-to-everything (vehicle-to-everything, V2X). In vehicle-to-everything, each vehicle is equivalent to UE, and data may be directly transmitted between UEs through a sidelink but not over a network. This effectively reduces a communication delay.

### 2. Unicast (one-to-one) communication

Broadcast, unicast, and multicast are supported on the sidelink.

In unicast communication, a unicast connection needs to be first established between two UEs. After the unicast connection is established, the two UEs may perform data communication based on negotiated identifiers.

Unicast communication performed once on the sidelink corresponds to a pair of a source layer-2 identifier (Source Layer-2 Identifier, source L2 ID) and a destination layer-2 identifier (Destination Layer-2 Identifier, destination L2 ID). A subheader of each sidelink medium access control protocol data unit (Medium Access Control Protocol Data Unit, MAC PDU) includes a source L2 ID and a destination L2 ID, so that data sent by a transmitter can be transmitted to a correct receiver.

Optionally, the source L2 ID and the destination L2 ID may be device identifiers of terminal devices. For example, as shown in FIG. 1, the UE 1 sends data to the UE 2, the source L2 ID may be a device identifier of the UE 1, and the destination L2 ID may be a device identifier of the UE 2.

This application is applicable to unicast communication performed by terminal devices on a sidelink.

### 3. Scenario in which two UEs perform sidelink communication

### (1) Communication system

For example, FIG. 2 is a diagram of an architecture of a wireless communication system in which two UEs perform sidelink communication according to an embodiment of this application. As shown in FIG. 2, the wireless communication system may include a terminal device 101 and a network device 102. The terminal device includes UE 1 and UE 2, and the UE 1 and the UE 2 perform sidelink unicast communication.

The UE 1 may send data to the UE 2 through sidelink communication. The UE 1 is a transmit device, and the UE 2 is a receive device. The UE 2 may send data to the UE 1 through sidelink communication. The UE 2 is a transmit device, and the UE 1 is a receive device. In some implementations, the UE 1 is referred to as source UE (Source UE), and the UE 2 is referred to as target UE (Target UE).

The UE 1 communicates with a base station 1, and the base station 1 is a serving base station of the UE 1.

It should be noted that FIG. 2 is merely an example, and does not limit a quantity of terminal devices 101. For example, in an example, the terminal device 101 includes UE 1, UE 2, and UE 3. The UE 1 and the UE 2 perform sidelink communication, and the UE 1 and the UE 3 perform sidelink communication.

### (2) Protocol stack

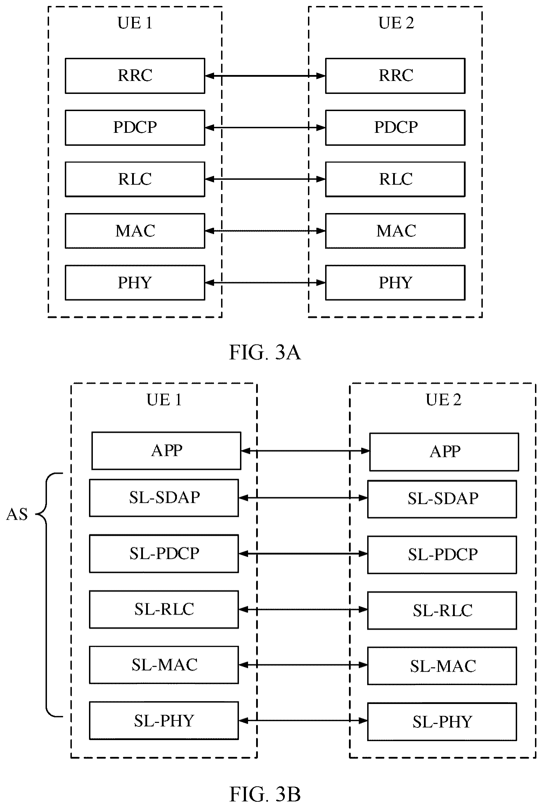

In a scenario in which two UEs perform sidelink unicast communication, FIG. 3A shows control plane protocol stacks of terminal devices, and FIG. 3B shows user plane protocol stacks of the terminal devices.

As shown in FIG. 3A, the control plane protocol stacks of UE 1 and UE 2 each include, from top to bottom, a radio resource control (Radio Resource Control, RRC) layer, a packet data convergence protocol (Packet Data Convergence Protocol, PDCP) layer, a radio link control (Radio Link Control, RLC) layer, a medium access control (Medium Access Control, MAC) layer, and a physical layer (Physical Layer, PHY). The protocol layers of the UE 1 and the UE 2 are peer-to-peer.

As shown in FIG. 2 and FIG. 3A, when the UE 1 sends signaling to the UE 2, the signaling sent by the UE 1 passes through the RRC layer, the PDCP layer, the RLC layer, the MAC layer, and the PHY layer in the UE 1, and a signal is sent to the UE 2 via a transmit antenna. After a receive antenna of the UE 2 receives the signal, the received signal passes through the PHY layer, the MAC layer, the RLC layer, the PDCP layer, and the RRC layer of the UE 2, and the UE 2 obtains the signaling sent by the UE 1.

As shown in FIG. 3B, the user plane protocol stacks of the UE 1 and the UE 2 each include, from top to bottom, an application (Application, APP) layer, an SL-service data adaptation protocol (Service Data Adaptation Protocol, SDAP) layer, an SL-PDCP layer, an SL-RLC layer, an SL-MAC layer, and an SL-PHY layer. The protocol layers of the UE 1 and the UE 2 are peer-to-peer.

As shown in FIG. 2 and FIG. 3B, when the UE 1 sends data to the UE 2, the data sent by the UE 1 passes through the APP layer, the SL-SDAP layer, the SL-PDCP layer, the SL-RLC layer, the SL-MAC layer, and the SL-PHY layer in the UE 1, and a signal is sent to the UE 2 via the transmit antenna. After the receive antenna of the UE 2 receives the signal, the received signal passes through the SL-PHY layer, the SL-MAC layer, the SL-RLC layer, the SL-PDCP layer, the SL-SDAP layer, and the APP layer of the UE 2, and the UE 2 obtains the data sent by the UE 1.

### (3) Radio bearer configuration process

Based on a data transmission direction, when the UE 1 sends data to the UE 2, the UE 1 is transmit UE, and the UE 2 is receive UE. On the contrary, when the UE 2 sends data to the UE 1, the UE 2 is transmit UE, and the UE 1 is receive UE. The transmit UE sends sidelink radio bearer (sidelink radio bearer, SLRB) configuration information of the transmit UE to the receive UE, so that the receive UE can receive data from the transmit UE. Correspondingly, the receive UE receives the SLRB configuration information from the transmit UE. It may be understood that, the SLRB configuration information varies with different data transmission directions.

It is assumed that the UE 1 sends data to the UE 2, and a process in which the UE 1 obtains the SLRB configuration information is as follows:

The UE 1 generates a QoS profile based on a requirement of the APP layer. Data arriving at the APP layer is mapped to a QoS flow (QoS flow) based on the QoS profile. Then, the QoS flow enters an access stratum (Access Stratum, AS) of the UE 1, and is transmitted in a bearer (sidelink radio bearer, SLRB) manner. As shown in FIG. 3B, the AS includes the SDAP layer, the PDCP layer, the RLC layer, the MAC layer, and the PHY layer. The SLRB configuration information includes an SDAP configuration, a PDCP configuration, an RLC configuration, and a logical channel (Logical Channel, LCH) configuration. The SDAP configuration includes a mapping relationship from the QoS flow to the SLRB. The UE 1 sends, based on the SLRB configuration information, the data to the UE 2 via the transmit antenna through the SDAP layer, the PDCP layer, the RLC layer, the MAC layer, and the PHY layer of the UE 1.

To ensure communication, the transmit UE and the receive UE need to have consistent SLRB configuration information, to control data sending or receiving.

Implementations of obtaining the SLRB configuration information vary with the transmit UE in different connection modes.

### (4) UE in a connected mode obtains the SLRB configuration information

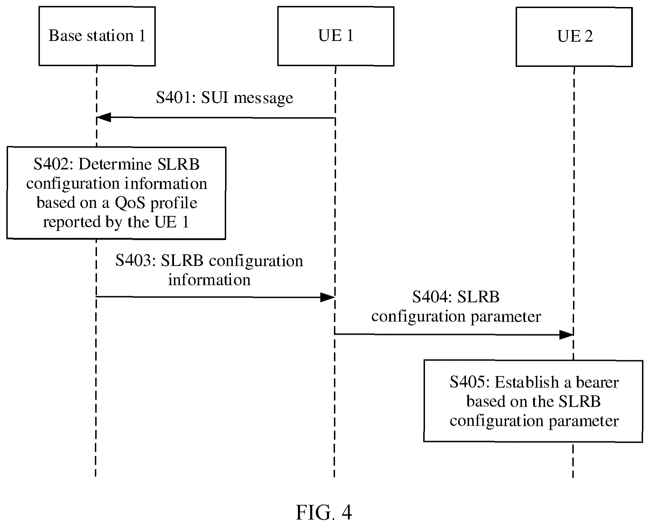

Refer to FIG. 2. It is assumed that the UE 1 is the transmit UE. As shown in FIG. 4, a radio bearer configuration method may include the following steps.

S401: The UE 1 sends an SUI message to the base station 1. The SUI is sidelink UE information (sidelinkUEInformation).

Correspondingly, the base station 1 receives the SUI message sent by the UE 1.

The SUI message includes a QoS information list. The QoS information list includes identification information of each QoS flow (QoS flow ID) and a corresponding QoS profile.

S402: The base station 1 performs SLRB configuration for the UE 1 based on the QoS profile reported by the UE 1, and determines SLRB configuration information.

S403: The base station 1 sends the SLRB configuration information to the UE 1. Correspondingly, the UE 1 receives the SLRB configuration information sent by the base station 1.

S404: The UE 1 sends an SLRB configuration parameter to the UE 2.

The SLRB configuration information is used for sending from the UE 1 to the UE 2, and the SLRB configuration parameter is used for receiving of the UE 2 from the UE 1.

The UE 1 sends the SLRB configuration parameter to the UE 2 based on the SLRB configuration information. Optionally, the SLRB configuration parameter may include at least one of the following: a part or all content of the SLRB configuration information, or related information determined based on the SLRB configuration information.

Optionally, the UE 1 sends the SLRB configuration parameter to the UE 2 based on an RRC reconfiguration sidelink message (RRCReconfigurationSidelink message).

S405: The UE 2 establishes a bearer based on the SLRB configuration parameter.

### (5) UE in an idle/inactive mode obtains the SLRB configuration information

When the UE 1 is in the idle (Idle) mode or the inactive (Inactive) mode, the UE 1 performs SLRB configuration based on content in a system message (System Information Block, SIB) 12 delivered by the base station, to obtain the SLRB configuration information.

Similarly, the UE 1 sends the SLRB configuration parameter to the UE 2. Refer to S404 and S405 in FIG. 4.

### (6) UE in an out of coverage (out of coverage, OoC) mode obtains the SLRB configuration information

When the UE 1 is in the OoC mode, that is, there is no sidelink frequency coverage, the UE 1 obtains the SLRB configuration information from the preconfigured information, and sends the SLRB configuration parameter to the UE 2. Refer to S404 and S405 in FIG. 4.

In the scenario in which the two UEs perform sidelink communication and directly transmit the data shown in FIG. 2, the user plane protocol layers of the transmit device and the receive device are peer-to-peer. Therefore, the base station of the transmit device or the transmit device may determine the SLRB configuration information based on the QoS profile corresponding to the QoS flow between the transmit device and the receive device, and the transmit device and the receive device have the consistent SLRB configuration information. This ensures data sending or receiving.

### 4. UE to UE relay (relay) scenario

### (1) Communication system

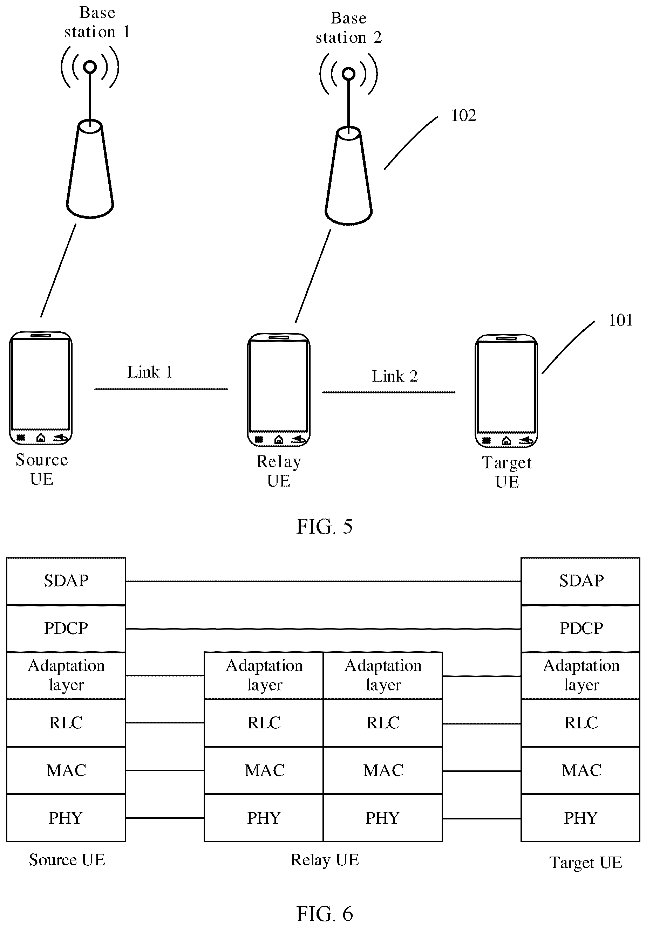

For example, FIG. 5 is a diagram of an architecture of a wireless communication system in a UE to UE relay scenario according to an embodiment of this application. As shown in FIG. 5, the wireless communication system may include a terminal device 101 and a network device 102. UE to UE is also represented as UE-to-UE, which means user equipment to user equipment.

The terminal device includes source UE (Source UE), relay UE (Relay UE), and target UE (Target UE). A quantity of relay UEs and a quantity of target UEs are not limited in this application. For example, there are one or more relay UEs, and there are one or more target UEs. SL unicast communication is performed between the source UE and the relay UE, and between the relay UE and the target UE. The source UE and the target UE may transfer data and signaling via the relay UE. Coverage enhancement or capacity increase may be implemented via the relay UE.

The network device 102 includes a base station 1 and a base station 2. The source UE communicates with the base station 1, and the base station 1 is a serving base station of the source UE. The relay UE communicates with the base station 2, and the base station 2 is a serving base station of the relay UE.

In some embodiments of this application, the source UE is identified as UE 1, the relay UE is identified as UE 3, and the target UE is identified as UE 2. The UE 1 may send data to the UE 2 via the UE 3, and the UE 1 is a transmit device, the UE 2 is a receive device, and the UE 3 is a relay device. The UE 2 may send data to the UE 1 via the UE 3, and the UE 2 is a transmit device, the UE 1 is a receive device, and the UE 3 is a relay device.

It should be noted that FIG. 5 is merely an example, and does not limit a quantity of terminal devices 101.

For example, in an example, the terminal device 101 includes UE 1 to UE 4, and sidelink communication is performed between the UE 1 and the UE 3, between the UE 3 and the UE 2, and between the UE 3 and the UE 4. Data is transmitted between the UE 1 and the UE 2 via the UE 3, data is transmitted between the UE 1 and the UE 4 via the UE 3, and the UE 3 is a relay terminal device. In another example, the terminal device 101 includes UE 1 to UE 5, and sidelink communication is performed between the UE 1 and the UE 3, between the UE 3 and the UE 2, between the UE 1 and the UE 4, and between the UE 4 and the UE 5. Data is transmitted between the UE 1 and the UE 2 via the UE 3, and the UE 3 is a relay terminal device. Data is transmitted between the UE 1 and the UE 5 via the UE 4, and the UE 4 is a relay terminal device. In still another example, the terminal device 101 includes UE 1 to UE 4, and sidelink communication is performed between the UE 1 and the UE 3, between the UE 3 and the UE 4, and between the UE 4 and the UE 2. Data is transmitted between the UE 1 and the UE 2 via the UE 3 and the UE 4, and both the UE 3 and the UE 4 are relay terminal devices.

For ease of description, descriptions are provided in this application by using an example in which one transmit device corresponds to one relay terminal device and one receive device in the UE to UE relay scenario.

In the UE to UE relay scenario, communication between the source UE and the target UE is divided into two segments by the relay UE, and each segment may be referred to as a link (link) or a hop (hop). For ease of description, a segment between the source UE and the relay UE may be referred to as a link 1, and a segment between the relay UE and the target UE may be referred to as a link 2. Alternatively, a segment between the source UE and the relay UE may be referred to as a first hop, and a segment between the relay UE and the target UE may be referred to as a second hop.

The source UE, the relay UE, and the target UE may be in an RRC connected mode, an RRC idle mode, an RRC inactive mode, or an OoC mode.

### (2) Protocol stack

FIG. 6 shows user plane protocol stacks of the source UE, the relay UE, and the target UE in the UE to UE relay scenario. In the protocol architecture, an adaptation layer (Adaptation Layer) is added between an RLC layer and a PDCP layer. A main function of the adaptation layer is bearer multiplexing and demultiplexing. To be specific, different bearers can be multiplexed onto one bearer, or one bearer can be split into different bearers.

It can be learned from FIG. 6 that, compared with the user plane protocol stacks of the source UE and the target UE, the user plane protocol stack of the relay UE does not include an SDAP layer and a PDCP layer. Protocol layers of the relay UE are not peer-to-peer with those of the source UE and the target UE.

When the source UE sends data to the target UE, the data sent by the source UE passes through an SDAP layer, a PDCP layer, an adaptation layer, an RLC layer, a MAC layer, and a PHY layer in the source UE, and a signal is sent to the relay UE via a transmit antenna. A receive antenna of the relay UE receives the signal sent by the source UE, and the signal sent by the source UE passes through a PHY layer, a MAC layer, an RLC layer, and an adaptation layer of the relay UE, and then the relay UE needs to send data to the target UE. The data sent by the relay UE passes through the adaptation layer, the RLC layer, the MAC layer, and the PHY layer in the relay UE, and a signal is sent to the target UE via a transmit antenna. A receive antenna of the target UE receives the signal sent by the relay UE, and the signal sent by the relay UE passes through a PHY layer, a MAC layer, an RLC layer, an adaptation layer, a PDCP layer, and an SDAP layer in the target UE, so that the target UE receives the data sent by the source UE.

### (3) Radio bearer configuration

In the UE-to-UE relay scenario, the data sent by the source UE to the target UE needs to pass through the two paths. The first path is the link 1 between the source UE and the relay UE, and the second path is the link 2 between the relay UE and the target UE. Refer to FIG. 6. The user plane protocol stack of the relay UE does not include the SDAP layer and the PDCP layer, and user plane data is relayed and forwarded below the PDCP layer on the relay UE side. Consequently, in the UE to UE relay scenario, SLRB configuration information needs to include end-to-end SLRB configuration information between the source UE and the target UE and SLRB configuration information on each link. The end-to-end SLRB configuration information between the source UE and the target UE needs to include an SDAP configuration and a PDCP configuration, and the SLRB configuration information on each link needs to include configurations of an RLC layer and a protocol layer below the RLC layer. Optionally, the configurations of the RLC layer and the protocol layer below the RLC layer may be referred to as an RLC bearer configuration.

In addition, to ensure QoS between the source UE and the target UE, QoS split (split) needs to be performed on the QoS between the source UE and the target UE, to obtain QoS of the link 1 between the source UE and the relay UE and QoS of the link 2 between the relay UE and the target UE. QoS split is also referred to as QoS split. It may be understood that QoS profiles corresponding to a QoS flow, namely, a QoS profile corresponding to a QoS flow on the link 1 and a QoS profile corresponding to a QoS flow on the link 2 are different.

If the SDAP layer configuration and the PDCP layer configuration are determined based on the QoS between the source UE and the target UE, and the RLC bearer configuration is determined based on the QoS of the link 1 and the QoS of the link 2, the two sets of SLRB configuration information cannot be associated. The source UE does not know an RLC channel (channel) to which the data corresponds. If all configuration information is determined based on the QoS between the source UE and the target UE, the QoS between the source UE and the target UE can be met, but the QoS of the link 1 and the QoS of the link 2 cannot be ensured.

It can be learned that, in the UE-to-UE relay scenario, how to determine the SLRB configuration to ensure communication needs to be urgently resolved.

Embodiments of this application provide a radio bearer configuration method. A first terminal device sends data to a second terminal device via a relay terminal device. The first terminal device may obtain first configuration information and second configuration information. The first configuration information and the second configuration information include first association information. The first configuration information is used to determine a first radio bearer between the first terminal device and the second terminal device, and the second configuration information is used to determine a first channel between the first terminal device and the relay terminal device. The first terminal device is a transmit device, the second terminal device is a receive device, and the relay terminal device is a relay device. The first configuration information is an end-to-end configuration between the transmit device and the receive device, and the first radio bearer is an end-to-end SLRB between the transmit device and the receive device. The second configuration information is a configuration on a link 1 between the transmit device and the relay device, and the first channel is a channel on the link 1 between the transmit device and the relay device, and is used to transmit the end-to-end SLRB. The first radio bearer and the first channel may be associated based on the first association information. When sending data, the transmit device may determine that the end-to-end first radio bearer is transmitted on the link 1 over the first channel. This implements sending from the transmit device to the relay device, and ensures communication between the first terminal device and the relay terminal device and communication between the first terminal device and the second terminal device.

The following continues to describe concepts in this application.

### 1. Bearer (bearer), radio bearer (radio bearer, RB), SLRB, and RB configuration information

In a wireless communication system, data is transmitted through a bearer. The bearer may be understood as a channel used to bear data transmission.

In the wireless communication system, the radio bearer bears signaling or user data over a radio interface. The RB includes a signaling radio bearer (signaling radio bearer, SRB) and a data radio bearer (data radio bearer, DRB) based on different borne content. The SRB bears control plane (signaling) data, and the DRB bears user plane data. For example, a radio interface between a base station and UE is a Uu interface, and a radio bearer between the base station and the UE may bear signaling or user data. For another example, in sidelink communication, a radio interface between UEs is a PC5 interface, and the RB may be referred to as the SLRB.

In a radio bearer configuration process, the UE needs to obtain the RB configuration information. The RB configuration information is also referred to as an RB configuration, and includes related configurations at different protocol layers in a radio interface protocol. The radio interface protocol includes a rule for communication between two peer entities (entities). The entity indicates a hardware or software process for sending or receiving data. Protocol layering ensures effectiveness of radio transmission.

Usually, the radio interface protocol includes an RRC layer, a PDCP layer, an RLC layer, a MAC layer, and a PHY layer, where the RRC layer belongs to a control plane. The RB configuration information may include a series of resources allocated by a PDCP protocol entity, an RLC protocol entity, a MAC protocol entity, and a PHY, and the like. In some implementations, the PDCP layer and a protocol layer above the PDCP layer are referred to as higher layers, the RLC layer and a protocol layer below the RLC layer are referred to as lower layers, and the RB configuration information may include higher layer configuration information and lower layer configuration information.

It should be noted that the RB configuration information is related to a data transmission direction, and the RB configuration information varies with different data transmission directions. For example, it is assumed that UE 1 sends data to UE 2. The UE 1 obtains RB configuration information 1, where the RB configuration information 1 is used for sending from the UE 1 to the UE 2. The UE 1 sends the RB configuration information 1 to the UE 2, so that the UE 2 can receive the data from the UE 1. Correspondingly, the UE 2 determines RB configuration information 2 based on the RB configuration information 1, where the RB configuration information 2 is used for receiving of the UE 2 from the UE 1. It is assumed that the UE 2 sends data to the UE 1. In this case, the UE 2 obtains RB configuration information 3, where the RB configuration information 3 is used for sending from the UE 2 to the UE 1. The RB configuration information 3 is different from the RB configuration information 1.

It should be noted that the radio interface is also referred to as a radio communication interface or a communication interface, the radio interface protocol is also referred to as a protocol stack, and names thereof are not limited in this application.

It should be noted that, in this application, data in a broad sense includes control plane data and user plane data, and data in a narrow sense includes user plane data. The control plane data includes signaling. The user plane data is also referred to as user data or service data.

This application mainly relates to an SLRB configuration process during user plane data transmission in sidelink communication.

### 2. Quality of service (Quality of Service, QoS), QoS flow (QoS flow), and QoS profile (QoS profile)

To provide different quality of service for different services, the wireless communication system provides QoS management. The QoS management is an end-to-end (E2E) process, which requires coordination of all network nodes from a service initiator to a service responder to ensure service quality.

In the sidelink communication, the QoS management is based on the QoS flow, and the QoS flow is an end-to-end concept. The UE maps service data to the end-to-end QoS flow. The QoS flow corresponds to a QoS profile, and the QoS profile includes but is not limited to a series of performance requirement parameters such as a PQI (PC5 5QI), an allocation and retention priority (allocation and retention priority, ARP), a guaranteed bit rate (guaranteed bit rate, GFBR), and a delay.

The SLRB configuration information is determined based on the QoS profile corresponding to the QoS flow, there is a mapping relationship between the QoS flow and the SLRB, and the mapping relationship is included in the SLRB configuration information. The UE may determine, based on the SLRB configuration information, a channel that bears data transmission, to control sending or receiving of the service data.

### 3. First communication interface, second communication interface, first radio bearer, first channel, and second channel

This application is applicable to a UE to UE relay scenario in the sidelink communication. A first terminal device sends data to a second terminal device via a relay terminal device.

The first communication interface is a communication interface between the first terminal device and the relay terminal device, for example, a PC5 interface between source UE and relay UE. In some implementations, the first communication interface also indicates a link 1 or a first hop between the source UE and the relay UE.

The second communication interface is a communication interface between the relay terminal device and the second terminal device, for example, a PC5 interface between the relay UE and target UE. In some implementations, the second communication interface also indicates a link 2 or a second hop between the relay UE and the target UE.

The first radio bearer is a radio bearer that is between the first terminal device and the second terminal device and that is determined based on the first configuration information. The first configuration information is an end-to-end configuration between the source UE and the target UE, and needs to include an SDAP configuration and a PDCP configuration. The first radio bearer is an end-to-end concept, and is an end-to-end SLRB between the source UE and the target UE.

The first channel is determined based on second configuration information and is used to transmit the first radio bearer through the first communication interface. The second configuration information is a configuration on the link 1 between the source UE and the relay UE, and needs to include an RLC bearer configuration on the link 1. The first channel is a channel for transmitting the first radio bearer on the link 1 between the source UE and the relay UE, for example, an RLC channel (RLC channel) on the link 1. When sending data to the relay UE, the source UE needs to determine the first channel corresponding to the first radio bearer. Sending from the source UE to the relay UE can be implemented only after the first channel is determined.

The second channel is determined based on third configuration information and is used to transmit the first radio bearer through the second communication interface. The third configuration information is a configuration on the link 2 between the relay UE and the target UE, and needs to include an RLC bearer configuration on the link 2. The second channel is a channel for transmitting the first radio bearer on the link 2 between the relay UE and the target UE, for example, an RLC channel (RLC channel) on the link 2. When sending data to the target UE, the relay UE needs to determine the second channel corresponding to the first radio bearer. Sending from the relay UE to the target UE can be implemented only after the second channel is determined.

### 4. QoS information, first QoS information, second QoS information, third QoS information, fourth QoS information, QoS profile, QoS split (QoS split), and first QoS flow

In the UE to UE relay scenario, sidelink communication between the first terminal device and the second terminal device is divided into two segments by the relay terminal device. To ensure service quality, different QoS information is included between the first terminal device and the second terminal device, the link 1 between the first terminal device and the relay terminal device, and the link 2 between the relay terminal device and the second terminal device, and the first QoS information, the second QoS information, the third QoS information, and the fourth QoS information are specifically included.

It should be noted that, in this application, the QoS information includes QoS information at a flow granularity and QoS information at an RB granularity. The QoS information at the flow granularity is represented as a QoS profile corresponding to a QoS flow identifier (QoS flow ID). The QoS information at the RB granularity is represented as a QoS profile corresponding to a first identifier. For the QoS profile, refer to the foregoing concept descriptions. Details are not described herein again. The first identifier is used to identify the first radio bearer. For details, refer to subsequent descriptions. The QoS information at the RB granularity may be obtained based on the QoS information at the flow granularity and a mapping relationship between the first QoS flow and the first radio bearer. The first QoS flow is an end-to-end QoS flow between the first terminal device and the second terminal device. A quantity of first QoS flows is not limited in this application, and may be determined by an application layer of the first terminal device based on the service data.

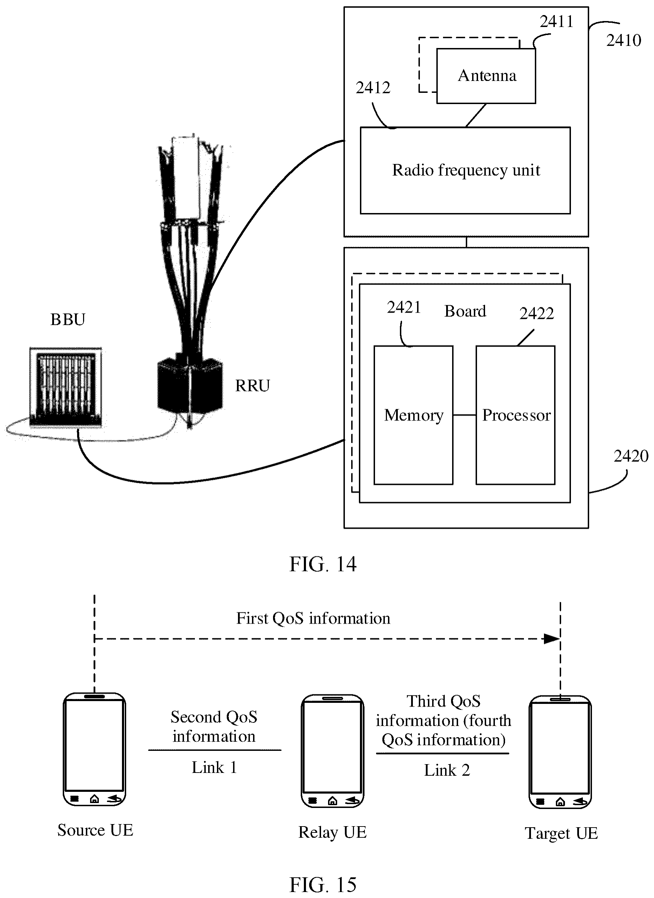

For example, as shown in FIG. 15, the first QoS information is included between the source UE and the target UE, the second QoS information is included on the link 1 between the source UE and the relay UE, and the third QoS information and the fourth QoS information are included on the link 2 between the relay UE and the target UE.

The first QoS information is a QoS profile corresponding to the first QoS flow. The first QoS information is the QoS information at the flow granularity.

The second QoS information is a QoS profile that is determined based on the first QoS information and that needs to be met on the first communication interface. The second QoS information may include second QoS information at a flow granularity and second QoS information at an RB granularity. When the second QoS information is the second QoS information at the flow granularity, the second QoS information at the RB granularity may be obtained based on the second QoS information at the flow granularity and the mapping relationship between the first QoS flow and the first radio bearer. The second QoS information at the RB granularity is a QoS profile that the first radio bearer needs to meet on the first communication interface. The RLC bearer configuration in the second configuration information may be determined based on the second QoS information, that is, the RLC bearer configuration on the link 1 is determined.

The third QoS information is a QoS profile that is determined based on the first QoS information and that needs to be met on the second communication interface. The third QoS information may include third QoS information at a flow granularity and third QoS information at an RB granularity. When the third QoS information is the third QoS information at the flow granularity, the third QoS information at the RB granularity may be obtained based on the third QoS information at the flow granularity and the mapping relationship between the first QoS flow and the first radio bearer. The third QoS information at the RB granularity is also referred to as the fourth QoS information, and is a QoS profile that the first radio bearer needs to meet on the second communication interface. The RLC bearer configuration in the third configuration information may be determined based on the third QoS information or the fourth QoS information, that is, the RLC bearer configuration on the link 2 is determined.

QoS split may be performed on the first QoS information, to obtain the second QoS information at the flow granularity and/or the third QoS information at the flow granularity.

QoS split may be performed by the first terminal device, a first network device, the relay terminal device, a second network device, or another device other than these devices.

### 5. Configuration information, first configuration information, second configuration information, third configuration information, first association information, first identifier, first information, second information, and third information

The first terminal device needs to obtain the configuration information, where the configuration information is used for sending from the first terminal device to the relay terminal device. The configuration information includes the first configuration information and the second configuration information. The first configuration information and the second configuration information include the first association information, where the first association information indicates an association relationship between the first configuration information and the second configuration information.

The first configuration information is determined based on the first QoS information. The first configuration information is used to determine the first radio bearer. The first configuration information is the end-to-end configuration between the first terminal device and the second terminal device, and includes at least the SDAP configuration and the PDCP configuration. The SDAP configuration includes the mapping relationship between the first QoS flow and the first radio bearer.

The second configuration information is determined based on the second QoS information. The second configuration information is used to determine the first channel. The second configuration information is the configuration on the link 1 between the first terminal device and the relay terminal device, and includes at least the RLC bearer configuration on the link 1.

It can be learned that the first configuration information and the second configuration information are associated based on the first association information. The configuration information includes the SDAP configuration and the PDCP configuration in the first configuration information, and the RLC bearer configuration on the link 1 in the second configuration information. Refer to the user plane protocol stack shown in FIG. 6. A complete set of an SLRB configuration is formed. When sending data to the relay terminal device, the first terminal device may determine that the end-to-end first radio bearer is transmitted on the link 1 over the first channel. In addition, the first configuration information is determined based on the end-to-end first QoS information between the first terminal device and the second terminal device, and the second configuration information is determined based on the second QoS information on the link 1 between the first terminal device and the relay terminal device. This meets QoS between the first terminal device and the second terminal device and QoS between the first terminal device and the relay terminal device, and ensures service communication quality.

The first association information included in the first configuration information and the second configuration information varies with different implementations of determining the first configuration information and the second configuration information.

Optionally, in an implementation, the first association information included in the first configuration information and the second configuration information includes the first identifier. The first identifier is used to identify the first radio bearer. Optionally, the first identifier may be any one of the following: an index of a sidelink configuration, an identifier obtained through mapping based on an index of a sidelink configuration, an SLRB identifier, or an RLC channel identifier. Optionally, the index of the sidelink configuration may be represented as SLRB-Uu-ConfigIndex or PC5-ConfigIndex. The SLRB identifier may be represented as a bearer ID. The RLC channel identifier may be represented as an RLC channel ID. This implementation is applicable to a first manner of determining the first configuration information and the second configuration information. For details, refer to subsequent descriptions.

Optionally, in another implementation, the first association information included in the first configuration information and the second configuration information includes the mapping relationship between the first QoS flow and the first radio bearer. This implementation is applicable to a second manner of determining the first configuration information and the second configuration information. For details, refer to subsequent descriptions.

Manners of obtaining the configuration information vary with the first terminal device in different connection modes.

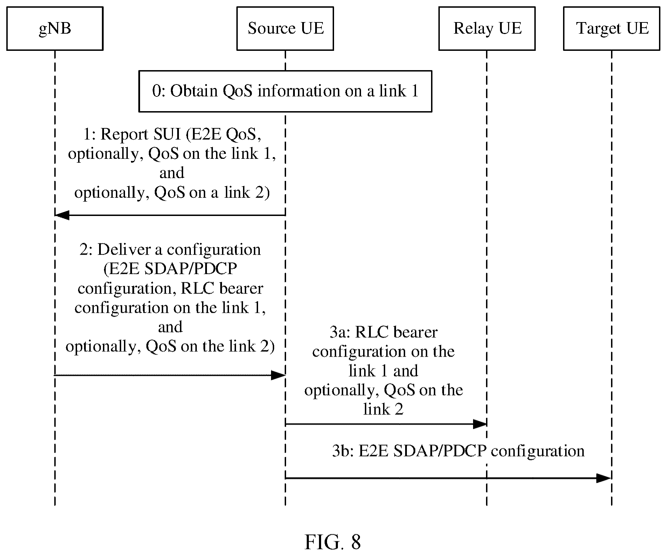

Optionally, when the first terminal device is in a connected mode, the first network device determines the configuration information based on related QoS information. The first terminal device obtains the configuration information from the first network device. In this implementation, the first terminal device needs to send the related QoS information to the first network device. Refer to the embodiment shown in FIG. 8.

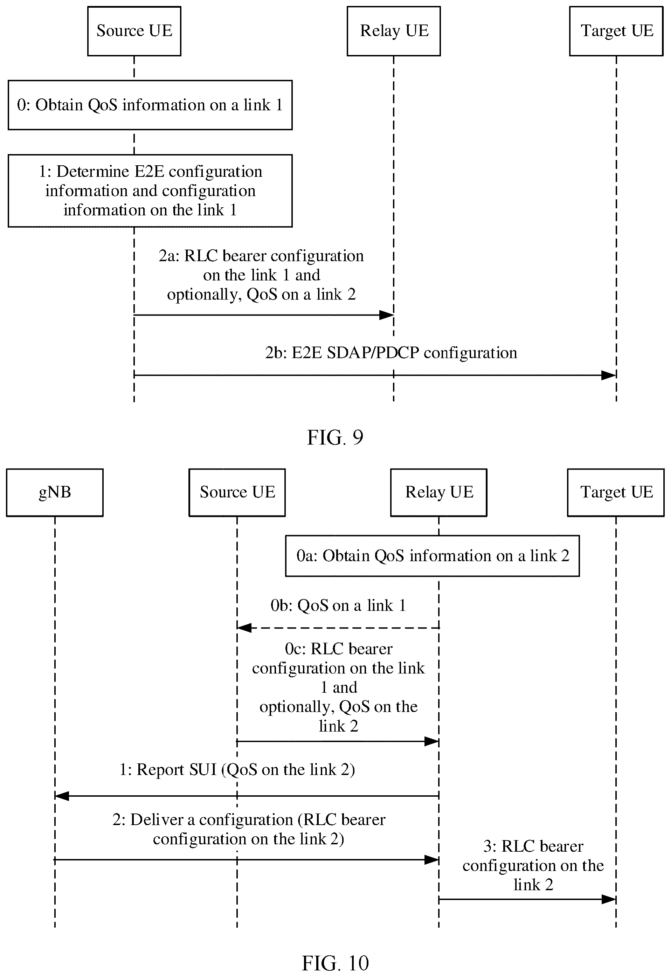

Optionally, when the first terminal device is in an idle/inactive mode, the first terminal device determines the configuration information based on related QoS information and an SIB 12 message delivered by the first network device. Refer to the embodiment shown in FIG. 9.

Optionally, when the first terminal device is in an OoC mode, the first terminal device determines the configuration information based on related QoS information and preconfigured information. Refer to the embodiment shown in FIG. 9.

After obtaining the configuration information, the first terminal device sends the second information to the relay terminal device based on the configuration information, where the second information includes the RLC bearer configuration on the link 1. Optionally, the second information may further include the first identifier. Correspondingly, the relay terminal device receives the second information sent by the first terminal device. The second information is used for receiving of the relay terminal device from the first terminal device.

The relay terminal device further needs to obtain the third configuration information, where the third configuration information is used for sending from the relay terminal device to the second terminal device. The third configuration information is used to determine the second channel. The third configuration information is the configuration on the link 2 between the relay terminal device and the second terminal device, and includes the RLC bearer configuration on the link 2. The third configuration information is determined based on the third QoS information or the fourth QoS information.

The third configuration information further includes the first identifier. Specifically, the first identifier indicates the first radio bearer. In addition, the second channel can be determined based on the third configuration information. Therefore, a correspondence between the first radio bearer and the second channel can be determined based on the first identifier. It should be noted that, in some implementations, it is alternatively expressed as that the third configuration information includes the first association information. In this case, the first association information is specifically the first identifier.

It can be learned that the relay terminal device obtains the first association information, and the first association information is specifically the first identifier. The first radio bearer and the second channel are associated based on the first identifier. When sending data to the second terminal device, the relay terminal device may determine that the end-to-end first radio bearer is transmitted on the link 2 over the second channel. In addition, the first radio bearer is determined based on the end-to-end first QoS information between the first terminal device and the second terminal device, and the second channel is determined based on the third QoS information on the link 2 between the relay terminal device and the second terminal device. This meets the QoS between the first terminal device and the second terminal device and QoS between the relay terminal device and the second terminal device, and ensures the service communication quality.

Optionally, the relay terminal device obtains the third configuration information to obtain the first association information. Alternatively, when the second information includes the first identifier, the relay terminal device may obtain the first association information.

Implementations of obtaining the third configuration information vary with the relay terminal device in different connection modes.

Optionally, when the relay terminal device is in a connected mode, the second network device determines the third configuration information based on related QoS information. The relay terminal device obtains the third configuration information from the second network device. In this implementation, the relay terminal device needs to send the related QoS information to the second network device. Refer to the embodiment shown in FIG. 10.

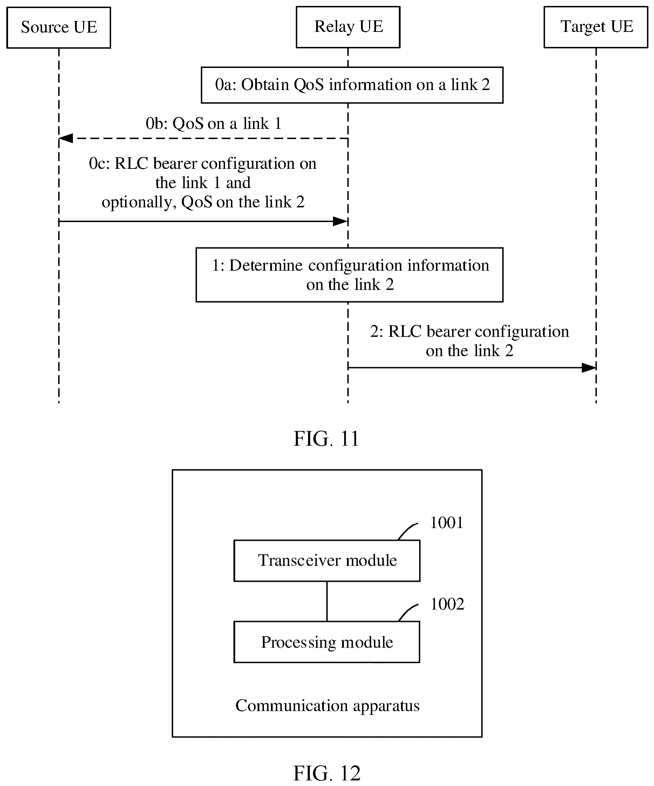

Optionally, when the relay terminal device is in an idle/inactive mode, the relay terminal device determines the third configuration information based on related QoS information and an SIB 12 message delivered by the second network device. Refer to the embodiment shown in FIG. 11.

Optionally, when the relay terminal device is in an OoC mode, the relay terminal device determines the third configuration information based on related QoS information and preconfigured information. Refer to the embodiment shown in FIG. 11.

After obtaining the configuration information, the first terminal device further sends the first information to the second terminal device via the relay terminal device based on the configuration information, where the first information includes the first association information, the SDAP configuration, and the PDCP configuration. Correspondingly, the second terminal device receives, via the relay terminal device, the first information sent by the first terminal device. The first information is used for end-to-end receiving of the second terminal device from the first terminal device, and relates to the SDAP layer and the PDCP layer.

After obtaining the third configuration information, the relay terminal device sends the third information to the second terminal device based on the third configuration information. The third information includes the RLC bearer configuration on the link 2. Optionally, the third information may further include the first identifier. Correspondingly, the second terminal device receives the third information sent by the relay terminal device. The third information is used for receiving of the second terminal device from the relay terminal device.

When sending data to the second terminal device via the relay terminal device, the first terminal device carries the first identifier at an adaptation layer of a data packet. The second terminal device receives the data packet from the relay terminal device based on the third information, and then delivers the data packet to the PDCP layer based on the first identifier. In addition, the SDAP configuration and the PDCP configuration are determined based on the end-to-end first QoS information between the first terminal device and the second terminal device, and the RLC bearer configuration on the link 2 is determined based on the third QoS information on the link 2 between the relay terminal device and the second terminal device. This meets the QoS between the first terminal device and the second terminal device and the QoS between the relay terminal device and the second terminal device, and ensures the service communication quality.

### 6: Determining of the configuration information

The first configuration information and the second configuration information may be determined by the first terminal device or the first network device.

### (1) First manner

Determining the first configuration information may include:
Determining the first configuration information based on the first QoS information, where the first configuration information includes the SDAP configuration and the PDCP configuration, and the SDAP configuration includes the mapping relationship between the first QoS flow and the first radio bearer.

After the first configuration information is determined, determining the second configuration information may include:
obtaining the second QoS information at the flow granularity and the mapping relationship between the first QoS flow and the first radio bearer in the first configuration information;
obtaining the second QoS information at the RB granularity based on the mapping relationship between the first QoS flow and the first radio bearer and the second QoS information at the flow granularity; and
determining the second configuration information based on the second QoS information at the RB granularity, where the second configuration information includes the RLC bearer configuration on the link 1 between the first terminal device and the relay terminal device.

In this implementation, the first association information includes the first identifier. The first configuration information and the second configuration information include the first identifier, and the first configuration information and the second configuration information are associated based on the first identifier, so that an RLC entity to which a PDCP entity is mapped can be determined, radio bearer configuration is implemented, and communication is ensured.

Manners of obtaining the second QoS information at the flow granularity vary with different execution devices for determining the configuration information and different execution devices for performing QoS split. The execution device for determining the configuration information may be the first network device or the first terminal device. The execution device for performing QoS split may be the first terminal device, the first network device, the relay terminal device, the second network device, or another device other than these devices.

For example, if the first network device performs QoS split and determines the configuration information, the first network device obtains the second QoS information at the flow granularity after performing QoS split.

For another example, the first terminal device performs QoS split, and the first network device determines the configuration information. In this case, after completing QoS split, the first terminal device sends the second QoS information at the flow granularity to the first network device. Correspondingly, the first network device receives the second QoS information at the flow granularity sent by the first terminal device.

Optionally, obtaining the second QoS information at the RB granularity based on the mapping relationship between the first QoS flow and the first radio bearer and the second QoS information at the flow granularity may include:
determining a QoS profile corresponding to an RB based on a QoS profile (QoS profile) corresponding to a first QoS flow mapped to the RB in any one of the following manners:

QoS profile corresponding to a first QoS flow with a highest priority in first QoS flows mapped to the RB: For example, it is assumed that there are three first QoS flows, which are identified as a QoS flow 1 to a QoS flow 3, and all the first QoS flows are mapped to a same RB. If the QoS flow 1 has a highest priority, a QoS profile of the QoS flow 1 is used as a QoS profile corresponding to the RB.

QoS profile corresponding to a first QoS flow with a minimum packet delay budget (Packet Delay Budget, PDB) in first QoS flows mapped to the RB: For example, it is assumed that there are three first QoS flows, which are identified as a QoS flow 1 to a QoS flow 3, and all the first QoS flows are mapped to a same RB. If the QoS flow 1 has a minimum packet delay budget, a QoS profile of the QoS flow 1 is used as a QoS profile corresponding to the RB.

QoS profile corresponding to a first QoS flow with a highest guaranteed flow bit rate (Guaranteed Flow Bit Rate, GFBR) in first QoS flows mapped to the RB.

QoS profile corresponding to a first QoS flow with a minimum packet error rate (Packet Error Rate, PER) in first QoS flows mapped to the RB.

QoS profiles that best meet requirements in a plurality of sets of QoS profiles corresponding to first QoS flows mapped to an RB: For example, it is assumed that there are three first QoS flows, which are identified as a QoS flow 1 to a QoS flow 3, and all the first QoS flows are mapped to a same RB. In the QoS flow 1 to the QoS flow 3, a packet delay budget of the QoS flow 1 is the lowest, a guaranteed flow bit rate of the QoS flow 2 is the highest, and a packet error rate of the QoS flow 3 is the lowest. In this case, these profiles are used as QoS profiles corresponding to the RB.

Average values of QoS profiles in a plurality of sets of QoS profiles corresponding to first QoS flows mapped to an RB: For example, it is assumed that there are three first QoS flows, which are identified as a QoS flow 1 to a QoS flow 3, and all the first QoS flows are mapped to a same RB. Packet delay budgets of the QoS flow 1 to the QoS flow 3 are averaged, guaranteed flow bit rates of the QoS flow 1 to the QoS flow 3 are averaged, and packet error rates of the QoS flow 1 to the QoS flow 3 are averaged, and these average values are used as QoS profiles corresponding to the RB.

### (2) Second manner

Determining the first configuration information may include:
determining the first configuration information based on the first QoS information, where the first configuration information includes the SDAP configuration, the PDCP configuration, and an RLC bearer configuration between the first terminal device and the second terminal device, and the SDAP configuration includes the mapping relationship between the first QoS flow and the first radio bearer.

Determining the second configuration information may include:
determining the second configuration information based on the second QoS information at the flow granularity, where the second configuration information includes an SDAP configuration, a PDCP configuration, and the RLC bearer configuration on the link 1 between the first terminal device and the relay terminal device, and the SDAP configuration includes the mapping relationship between the first QoS flow and the first radio bearer.

In this implementation, the first association information includes the mapping relationship between the first QoS flow and the first radio bearer.

In this implementation, the mapping relationship between the first QoS flow and the first radio bearer in the first configuration information is the same as that in the second configuration information, for example, a scenario in which the first QoS information and the second QoS information at the flow granularity are correspondingly proportional. For example, QoS split may be performed in proportion. In this way, after the QoS split, the first QoS information, the second QoS information at the flow granularity, and the third QoS information at the flow granularity are correspondingly proportional. In other words, a proportional relationship between QoS profiles corresponding to first QoS flows is the same as a proportional relationship between QoS profiles corresponding to the first QoS flows on each link. For example, there are two first QoS flows: a flow 1 and a flow 2. QoS profiles are packet delay budgets (Packet Delay Budget, PDB). It is assumed that before QoS split, a proportional relationship between the PDB corresponding to the flow 1 and the PDB corresponding to the flow 2 is 2:1. In this case, after the QoS split, a proportional relationship between a PDB on each link corresponding to the flow 1 and a PDB on each link corresponding to the flow 2 is 2:1.

The mapping relationship between the first QoS flow and the first radio bearer in the first configuration information is the same as that in the second configuration information, and so is the RLC bearer configuration. Therefore, the first configuration information and the second configuration information may be associated based on the mapping relationship between the first QoS flow and the first radio bearer. When sending data, the first terminal device may determine a mapping relationship between the PDCP entity in the first configuration information and the RLC entity in the second configuration information, and may determine that the end-to-end first radio bearer is transmitted on the link 1 over the first channel. This implements sending from the first terminal device to the relay terminal device.

It should be noted that both the first configuration information determined based on the first QoS information and the second configuration information determined based on the second QoS information at the flow granularity are complete configurations, and the configuration information needs to include only the SDAP configuration and the PDCP configuration in the first configuration information, and the RLC bearer configuration on the link 1 in the second configuration information.

### 7: Determining of the third configuration information

The third configuration information may be determined by the relay terminal device or the second network device.

Determining the third configuration information may include:
obtaining the fourth QoS information, and determining the third configuration information based on the fourth QoS information.

Optionally, obtaining the fourth QoS information may include:
receiving the fourth QoS information sent by another device; or
obtaining the fourth QoS information based on the mapping relationship between the first QoS flow and the first radio bearer and the third QoS information at the flow granularity.

For obtaining the QoS information of the RB granularity, refer to the related descriptions in the first manner of determining the configuration information. Details are not described herein again.

### 8. First message and first indication information

When the first terminal device is in the connected state, and the first network device determines the configuration information, the first terminal device needs to send the first message to the first network device. The first message includes at least the first QoS information and first indication information, and the first indication information indicates that the first terminal device communicates with the second terminal device via the relay terminal device.

Correspondingly, the first network device receives the first message sent by the first terminal device, and may determine the configuration information based on at least the first QoS information.

It is ensured, based on the first indication information, that the first network device can identify the UE to UE relay scenario, to perform the radio bearer configuration method provided in this application, so as to avoid a failure in radio bearer configuration caused by the first network device mistakenly determining a scenario in which the first terminal device performs direct data transmission with a plurality of other terminal devices.

Optionally, the first message is a SidelinkUEInformationNR message.

Optionally, the first message may further include the second QoS information and/or the third QoS information.

In this implementation, when the execution device for performing QoS split is the first terminal device, the relay terminal device, the second network device, or another device other than these devices, the first terminal device may obtain the second QoS information and/or the third QoS information. The first terminal device may send the second QoS information and/or the third QoS information to the first network device. The first network device may further determine the configuration information based on the second QoS information and/or the third QoS information.

Optionally, if the first message includes the second QoS information, the first network device may obtain the third QoS information based on the first QoS information and the second QoS information.

Optionally, if the first message includes the third QoS information, the first network device may obtain the second QoS information based on the first QoS information and the third QoS information.

In the foregoing implementation, the second QoS information and the third QoS information are obtained by performing QoS split on the first QoS information. Therefore, when two pieces of QoS information of the first QoS information, the second QoS information, and the third QoS information are known, the remaining piece of QoS information may be obtained. This improves flexibility of reporting the QoS information by the first terminal device to the first network device.

The following describes an implementation of the first indication information.

Optionally, the first indication information includes a device identifier of the relay terminal device, the first QoS information, and a device identifier, of the second terminal device, associated with the first QoS information.

In this implementation, the first terminal device reports the first QoS information, and subsequently, the first network device completes QoS split. An example is used for description. The first indication information includes the device identifier of the relay UE, the device identifier of the target UE, and the first QoS information. The first QoS information is associated with the device identifier of the second terminal device, which indicates that the second terminal device is a receive device. However, the device identifier of the relay terminal device is not associated with the QoS information, which indicates the UE to UE relay scenario, and that the first terminal device sends data to the second terminal device via the relay terminal device.

Optionally, the first indication information further includes the second QoS information and a device identifier, of the relay terminal device, associated with the second QoS information.

In this implementation, the first terminal device reports the first QoS information and the second QoS information, and the first network device does not need to perform QoS split. The first QoS information is associated with the device identifier of the second terminal device, and the second QoS information is associated with the device identifier of the relay terminal device, which can indicate the UE to UE relay scenario.

Optionally, in an implementation, the second terminal device and the relay terminal device may be explicitly indicated. For example, the first indication information includes (the device identifier of the relay UE, the device identifier of the target UE, and the first QoS information) and (the device identifier of the relay UE and the second QoS information). In the first part, the device identifier of the relay UE is not associated with the QoS information, which indicates that the relay UE is the relay terminal device.

Optionally, in another implementation, the second terminal device and the relay terminal device may be implicitly indicated. For example, the first indication information includes (the device identifier of the target UE and the first QoS information) and (the device identifier of the relay UE and the second QoS information). For example, by default, a device identifier ranked first is the device identifier of the second terminal device, and a device identifier ranked last is the device identifier of the relay terminal device.

Optionally, the first indication information includes the second QoS information, the device identifier, of the relay terminal device, associated with the second QoS information, and a terminal device list, where the terminal device list includes the first QoS information and the device identifier, of the second terminal device, associated with the first QoS information.

In this implementation, the first terminal device reports the first QoS information and the second QoS information, and the first network device does not need to perform QoS split. An example is used for description. The first indication information includes the second QoS information, the device identifier of the relay UE, and the terminal device list, and the terminal device list includes the device identifier of the target UE and the first QoS information. The relay terminal device and the second terminal device are explicitly indicated based on the terminal device list, and the UE to UE relay scenario is indicated. This improves flexibility and accuracy of the first indication information.

Optionally, the first message may further include:
an identifier of the first QoS flow associated with the relay terminal device and an identifier of the first QoS flow associated with the second terminal device, where the identifier of the first QoS flow associated with the relay terminal device is the same as the identifier of the first QoS flow associated with the second terminal device.

In this implementation, in the UE to UE relay scenario, first QoS flows between the first terminal device and the second terminal device, the link 1 between the first terminal device and the relay terminal device, and the link 2 between the relay terminal device and the second terminal device are the same QoS flow, but correspond to different QoS profiles. The first QoS information includes the identifier of the first QoS flow associated with the second terminal device, and the second QoS information includes the identifier of the first QoS flow associated with the relay terminal device. The identifier of the first QoS flow associated with the relay terminal device may be the same as or different from the identifier of the first QoS flow associated with the second terminal device.

For example, it is assumed that there are three first QoS flows.

In an example, identifiers of first QoS flows associated with the second terminal device are a QoS flow 1 to a QoS flow 3, and identifiers of first QoS flows associated with the relay terminal device are a QoS flow 4 to a QoS flow 6. The identifiers of the three first QoS flows associated with the second terminal device are different from those of the three first QoS flows associated with the relay terminal device. A correspondence may be indicated by arrangement sequences of identifiers of QoS flows. Actually, the QoS flow 1 and the QoS flow 4 are a same QoS flow, the QoS flow 2 and the QoS flow 5 are a same QoS flow, and the QoS flow 3 and the QoS flow 6 are a same QoS flow.

In another example, identifiers of first QoS flows associated with the second terminal device are a QoS flow 1 to a QoS flow 3, and identifiers of first QoS flows associated with the relay terminal device are a QoS flow 1 to a QoS flow 3. The identifiers of the three first QoS flows associated with the second terminal device are the same as those of the three first QoS flows associated with the relay terminal device.

It can be learned that the identifier of the first QoS flow associated with the relay terminal device is set to be the same as the identifier of the first QoS flow associated with the second terminal device, so that a correspondence between the first QoS information and the second QoS information is associated based on the first QoS flow with the same identifier. This implementation is simple.

### 9. Second message

When the relay terminal device is in the connected state, and the second network device determines the third configuration information, the relay terminal device needs to send the second message to the second network device, where the second message includes the fourth QoS information or the mapping relationship between the first QoS flow and the first radio bearer.

Correspondingly, the second network device receives the second message sent by the relay terminal device. The fourth QoS information is the QoS information at the RB granularity, and the second network device may determine the third configuration information based on the fourth QoS information. The second network device may alternatively obtain the fourth QoS information based on the mapping relationship between the first QoS flow and the first radio bearer and the third QoS information at the flow granularity, and then determine the third configuration information based on the fourth QoS information.

When the second information received by the relay terminal device from the first terminal device is different, content of the second message may be different.

Optionally, the relay terminal device receives the fourth QoS information from the first terminal device, and the second message may include the fourth QoS information. The fourth QoS information sent by the first terminal device may be determined by the first terminal device or may be determined by the first network device.

Optionally, the relay terminal device receives the mapping relationship between the first QoS flow and the first radio bearer from the first terminal device, and the second message may include the mapping relationship between the first QoS flow and the first radio bearer. This implementation is applicable to a scenario in which the second network device performs QoS split.

Optionally, the relay terminal device receives the mapping relationship between the first QoS flow and the first radio bearer from the first terminal device. The relay terminal device may obtain the fourth QoS information based on the mapping relationship between the first QoS flow and the first radio bearer and the third QoS information at the flow granularity, and the second message may include the fourth QoS information.

Optionally, the second message may further include the third QoS information.

For the third QoS information and the fourth QoS information, refer to the foregoing descriptions. Details are not described herein again.

The following describes in detail the technical solutions of this application by using specific embodiments.

In embodiments of this application, unless otherwise specified, for same or similar parts of embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The foregoing implementations of this application are not intended to limit the protection scope of this application. Steps in each embodiment may be partially performed (for example, the terminal device may not perform the steps performed by the terminal device in the foregoing embodiments). An execution sequence of different steps can be changed. Embodiments described in this specification may be combined with other embodiments, and steps of different embodiments in this specification may also be combined.

An "embodiment" mentioned in the specification means that a particular feature, structure, or characteristic described with reference to the embodiment may be included in at least one embodiment of this application. The phrase shown in various locations in this specification may not necessarily refer to a same embodiment, and is not an independent or optional embodiment exclusive from another embodiment.

Terms "first", "second", "third", "fourth", and the like (if existent) in embodiments of this application are intended to distinguish between similar objects but do not necessarily indicate a specific order or sequence.

In embodiments of this application, "include" may be an inclusion relationship or an equal relationship. For example, if A includes B, A may include other content in addition to B, or A and B are the same content.

In descriptions of this application, unless otherwise specified, a character "/" indicates an "or" relationship between associated objects. For example, A/B may indicate A or B. In this application, a term "and/or" describes only an association relationship between the associated objects and indicates that three relationships may exist. For example, A and/or B may indicate three cases: Only A exists, both A and B exist, and only B exists, where A and B may be singular or plural. In addition, in the descriptions of this application, "a plurality of" means two or more unless otherwise specified. "At least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, terms "of (of)", "corresponding (corresponding, relevant)", and "corresponding (corresponding)" may be interchangeably used sometimes. It should be noted that meanings expressed by the terms are consistent when differences are not emphasized.

In embodiments of this application, terms such as "example" and "for example" indicate giving an example, an illustration, or a description. Any embodiment or design scheme described as an "example" in this application should not be explained as being more preferred or having more advantages than another embodiment or design scheme. Exactly, use of the term example is intended to present a concept in a specific manner.

In embodiments of this application, the data transmission direction is that the first terminal device sends data to the second terminal device via the relay terminal device. With reference to the communication system shown in FIG. 5, the first terminal device may be the source UE, and the second terminal device may be the target UE. Alternatively, the first terminal device may be the target UE, and the second terminal device may be the source UE. For example, refer to FIG. 5 and FIG. 8 to FIG. 11. The first terminal device is the source UE (Source UE or source UE), the relay terminal device is the relay UE (Relay UE or relay UE), and the second terminal device is the target UE (Target UE or target UE). Refer to FIG. 5, FIG. 8, and FIG. 9. The first network device is the serving base station of the source UE, for example, the base station 1, which is represented as a gNB. Refer to FIG. 5, FIG. 10, and FIG. 11. The second network device is the serving base station of the relay UE, for example, the base station 2, which is represented as a gNB. The sidelink communication between the source UE and the relay UE is referred to as the link 1, and the sidelink communication between the relay UE and the target UE is referred to as the link 2.

In some embodiments of this application, the first radio bearer is represented as the E2E bearer or the E2E bearer.

In some embodiments of this application, the first QoS information is represented as the E2E QoS, the second QoS information is represented as the QoS information on the link 1, the third QoS information is represented as the QoS information on the link 2, and the fourth QoS information is represented as the QoS information at the RB granularity on the link 2.

In some embodiments of this application, the first configuration information is represented as the SLRB configuration config#1, the second configuration information is represented as the SLRB configuration config#2, and the third configuration information is represented as the RLC bearer configuration on the link 2.

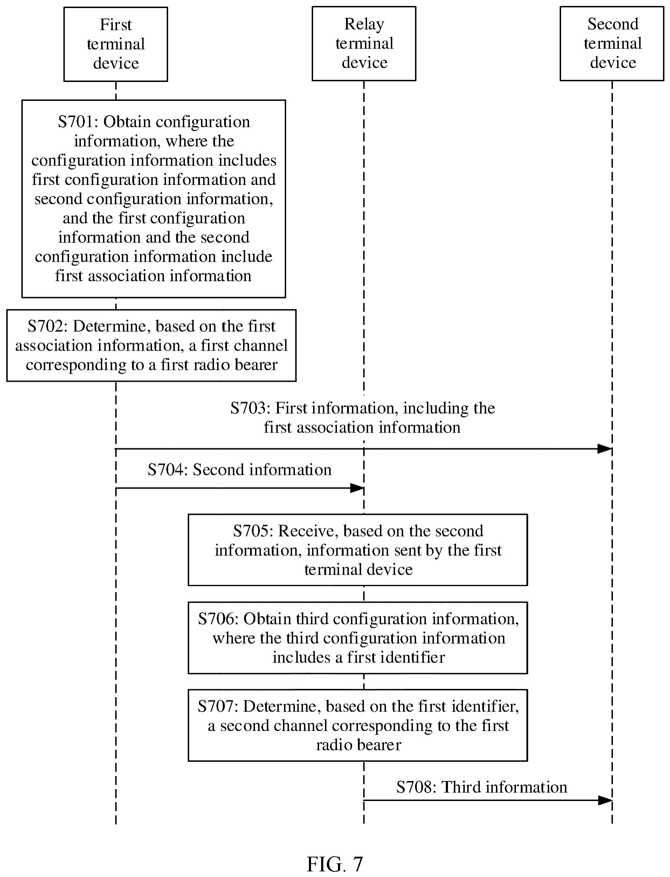

FIG. 7 is a flowchart of a radio bearer configuration method according to an embodiment of this application. The radio bearer configuration method provided in this embodiment is performed by a first terminal device, a relay terminal device, and a second terminal device. The first terminal device sends data to the second terminal device via the relay terminal device.

As shown in FIG. 7, the radio bearer configuration method provided in this embodiment may include the following steps.

S701: The first terminal device obtains configuration information, where the configuration information includes first configuration information and second configuration information, the first configuration information and the second configuration information include first association information, the first association information indicates an association relationship between the first configuration information and the second configuration information.

For the configuration information, the first configuration information, the second configuration information, and the first association information, refer to the foregoing related descriptions in this application. Details are not described herein again.

The first configuration information is configuration information between the first terminal device and the second terminal device, and includes an SDAP layer configuration and a PDCP layer configuration. The second configuration information is configuration information between the first terminal device and the relay terminal device, and includes an RLC bearer configuration. The association relationship between the first configuration information and the second configuration information is indicated based on the first association information. Refer to the user plane protocol stack shown in FIG. 6. The configuration information includes the SDAP configuration and the PDCP configuration in the first configuration information, and the RLC bearer configuration on a link 1 in the second configuration information. The configuration information is a complete set of an SLRB configuration based on the first configuration information, the second configuration information, and the first association information.

S702: The first terminal device determines, based on the first association information, a first channel corresponding to a first radio bearer.

For the first association information, the first radio bearer, and the first channel, refer to the foregoing related descriptions in this application. Details are not described herein again.

The first radio bearer is a radio bearer that is between the first terminal device and the second terminal device and that is determined based on the first configuration information, the first channel is determined based on the second configuration information and is used to transmit the first radio bearer through a first communication interface, and the first communication interface is a communication interface between the first terminal device and the relay terminal device.

Specifically, the first association information indicates the association relationship between the first configuration information and the second configuration information, and the configuration information includes the SDAP configuration, the PDCP configuration, and the RLC bearer configuration on the link 1. Therefore, the first terminal device may determine, based on the first association information, the first channel corresponding to the first radio bearer, and may deliver a data packet to a corresponding channel during data transmission, to ensure normal communication.

S703: The first terminal device sends first information to the second terminal device via the relay terminal device, where the first information includes the first association information.

For the first information, refer to the foregoing related descriptions in this application. Details are not described herein again.

Specifically, the first configuration information and the first information are used to establish a communication link between the first terminal device and the second terminal device. The first information also includes the first association information, and the first terminal device may complete association between a PDCP entity and an RLC entity based on the first association information. This ensures data transmission.

S704: The first terminal device sends second information to the relay terminal device, where the second information includes the first association information.

In this implementation, the first association information is specifically a first identifier.

For the second information and the first identifier, refer to the foregoing related descriptions in this application. Details are not described herein again.

Specifically, the second configuration information and the second information are used to establish a communication link between the first terminal device and the relay terminal device. The second information includes the first association information, and the first terminal device may complete association between the PDCP entity and the RLC entity based on the first association information. This ensures data transmission.

S705: The relay terminal device receives, based on the second information, the information sent by the first terminal device.

A sequence of performing S703 and S704 and S705 is not limited in this embodiment.

According to the radio bearer configuration method provided in this embodiment, the first terminal device may obtain the first configuration information between the first terminal device and the second terminal device and the second configuration information between the first terminal device and the relay terminal device. The first channel corresponding to the first radio bearer is determined based on the first association information, and the PDCP entity may be associated with the RLC entity based on the first association information. This ensures data transmission, and implements radio bearer configuration in a UE-to-UE relay scenario.

Optionally, the radio bearer configuration method provided in this embodiment may further include the following steps.

S706: The relay terminal device obtains third configuration information, where the third configuration information includes the first association information.

In this implementation, the first association information is specifically the first identifier.

For the third configuration information and the first identifier, refer to the foregoing related descriptions in this application. Details are not described herein again.

Specifically, the third configuration information is a configuration on a link 2 between the relay terminal device and the second terminal device. Association between the PDCP entity and the RLC entity is completed based on the first identifier. This ensures data transmission between the relay terminal device and the second terminal device.

S707: The relay terminal device determines, based on the first identifier, a second channel corresponding to the first radio bearer. The second channel is determined based on the third configuration information and is used to transmit the first radio bearer through a second communication interface, and the second communication interface is a communication interface between the relay terminal device and the second terminal device.

For the first identifier, the first radio bearer, and the second channel, refer to the foregoing related descriptions in this application. Details are not described herein again.

When sending data to the second terminal device, the relay terminal device may determine, based on the first identifier, that the end-to-end first radio bearer is transmitted on the link 2 over the second channel, and may deliver the data packet to a corresponding channel during data transmission, to ensure normal communication.

Optionally, the radio bearer configuration method provided in this embodiment may further include the following step.

S708: The relay terminal device sends third information to the second terminal device based on the third configuration information.

For the third information, refer to the foregoing related descriptions in this application. Details are not described herein again.

When sending data to the second terminal device via the relay terminal device, the first terminal device carries the first identifier at an adaptation layer of the data packet. The second terminal device receives the data packet from the relay terminal device based on the third information, and then delivers the data packet to the PDCP layer based on the first identifier. This ensures the data transmission.

Optionally, the first configuration information and the second configuration information are determined based on first QoS information and/or second QoS information.

The first QoS information is a QoS profile corresponding to a first QoS flow, and the first QoS flow is a QoS flow between the first terminal device and the second terminal device.

The second QoS information is a QoS profile that is determined based on the first QoS information and that needs to be met on the first communication interface.

For the first QoS information and the second QoS information, refer to the foregoing related descriptions in this application. Details are not described herein again.

The first QoS information is a QoS profile at a QoS flow granularity between the first terminal device and the second terminal device. The first configuration information is determined based on the first QoS information. This meets QoS between the first terminal device and the second terminal device, and ensures the service communication quality.

QoS split is performed on the first QoS information between the first terminal device and the second terminal device, to obtain the QoS profile that needs to be met on the first communication interface between the first terminal device and the second terminal device. Optionally, the QoS profile that needs to be met on the second communication interface between the relay terminal device and the second terminal device can be further obtained. The second communication interface is the communication interface between the first terminal device and the relay terminal device.

The second configuration information is determined based on the second QoS information.

The second configuration information is determined based on the second QoS information on the link 1 between the first terminal device and the relay terminal device. This meets QoS between the first terminal device and the relay terminal device, and ensures service communication quality.

Optionally, the second QoS information is a QoS profile that the first radio bearer needs to meet on the first communication interface.

In this implementation, the second QoS information is a QoS profile at an RB granularity between the first terminal device and the relay terminal device.

Optionally, the first association information is any one of the following: an index of a sidelink configuration, an identifier obtained through mapping based on an index of a sidelink configuration, a sidelink radio bearer SLRB identifier, or a radio link control RLC channel identifier.

The index of the sidelink configuration may be represented as SLRB-Uu-ConfigIndex or PC5-ConfigIndex, the SLRB identifier may be represented as a bearer ID, and the RLC channel identifier may be represented as an RLC channel ID.

Optionally, the radio bearer configuration method further includes the following step.

The first terminal device sends fourth QoS information or a mapping relationship between the first QoS flow and the first radio bearer to the relay terminal device. The first QoS flow is the QoS flow between the first terminal device and the second terminal device.

The fourth QoS information is a QoS profile that the first radio bearer needs to meet on the second communication interface, and the second communication interface is the communication interface between the relay terminal device and the second terminal device. For details, refer to the foregoing related descriptions in this application. Details are not described herein again.

Specifically, the first terminal device sends the fourth QoS information to the relay terminal device, so that the relay terminal device can directly obtain a QoS profile at an RB granularity between the relay terminal device and the second terminal device. Alternatively, the first terminal device sends the mapping relationship between the first QoS flow and the first radio bearer to the relay terminal device, so that the relay terminal device derives the fourth QoS information based on the mapping relationship. Further, the relay terminal device or a network device with which the relay terminal device communicates may determine, based on the fourth QoS information, the third configuration information between the relay terminal device and the second terminal device, where the third configuration information is used for sending from the relay terminal device to the second terminal device.

Optionally, when the first terminal device is in a connected mode, the radio bearer configuration method further includes the following steps.

The first terminal device sends a first message to a first network device. The first message includes at least the first QoS information and first indication information, and the first indication information indicates that the first terminal device communicates with the second terminal device via the relay terminal device.

The first network device determines the configuration information based on the first message. The configuration information includes the first configuration information and the second configuration information.

The first network device sends the configuration information to the first terminal device.

For the first message and the first indication information, refer to the foregoing related descriptions in this application. Details are not described herein again.

In this implementation, the first terminal device is in the connected mode, the first terminal device reports the related QoS information to the first network device, and the first network device determines the configuration information based on the first QoS information. The first indication information enables the first network device to identify the UE-to-UE relay scenario, and the delivered configuration information includes the first association information, for the first terminal device to determine a correspondence between the PDCP entity and the RLC entity.

Optionally, the first indication information includes:
a device identifier of the relay terminal device, the first QoS information, and a device identifier, of the second terminal device, associated with the first QoS information.

This implementation is applicable to a scenario in which the first terminal device reports the first QoS information, and the first network device performs QoS split to obtain the second QoS information.

Optionally, the first indication information further includes:
the second QoS information and a device identifier, of the relay terminal device, associated with the second QoS information.

This implementation is applicable to a scenario in which the first terminal device performs QoS split, to obtain the second QoS information.

Optionally, the first indication information includes:
the second QoS information, the device identifier, of the relay terminal device, associated with the second QoS information, and a terminal device list, where the terminal device list includes the first QoS information and the device identifier, of the second terminal device, associated with the first QoS information.

This implementation is applicable to the scenario in which the first terminal device performs QoS split, to obtain the second QoS information.

Optionally, the first message further includes at least one of the following:
the second QoS information, third QoS information, or an identifier of the first QoS flow associated with the relay terminal device and an identifier of the first QoS flow associated with the second terminal device.

The third QoS information is a QoS profile that is determined based on the first QoS information and that needs to be met on a second communication interface, and the second communication interface is the communication interface between the relay terminal device and the second terminal device.

The identifier of the first QoS flow associated with the relay terminal device is the same as the identifier of the first QoS flow associated with the second terminal device.

Optionally, the radio bearer configuration method may further include the following step.

The first terminal device performs QoS split on the first QoS information, to obtain the second QoS information and/or the third QoS information. Alternatively, the first terminal device receives the second QoS information and/or the third QoS information sent by the relay terminal device.

The third QoS information is a QoS profile that is determined based on the first QoS information and that needs to be met on the second communication interface, and the second communication interface is the communication interface between the relay terminal device and the second terminal device. For details, refer to the foregoing related descriptions in this application. Details are not described herein again.

Another embodiment of this application provides a radio bearer configuration method, which is behavior of source UE in a connected mode.

In a UE to UE relay scenario, Tx UE needs to report QoS information to a gNB, and receive, from the gNB, an SL configuration used to send data. Herein, an example in which a data direction is from source UE to target UE is used. FIG. 8 is a flowchart of determining a bearer configuration by a serving base station of source UE. The Tx UE represents a first terminal device. In this embodiment, a first terminal device is source UE, a relay terminal device is relay UE, a second terminal device is target UE, and a first network device is a serving base station of the source UE, and is represented as a gNB or a base station.

As shown in FIG. 8, the radio bearer configuration method includes the following steps.

Step 0: This step is optional. The source UE obtains QoS information on a link 1 in the following several specific manners:
The source UE performs QoS split, to obtain the QoS information on the link 1. In other words, in a connected mode, the UE also performs QoS split.

The QoS information on the link 1 is received from the gNB. To be specific, the serving base station of the source UE performs QoS split, and sends the QoS information on the link 1 to the source UE. Optionally, the gNB may not send the QoS information, and in this case, the source UE may not need to obtain the QoS information on the link 1.

The QoS information on the link 1 is received from the relay UE. To be specific, the relay UE or a serving base station of the relay UE performs QoS split, and sends the QoS information on the link 1 to the source UE. Optionally, QoS information on a link 2 may be further sent to the source UE.

Step 1: The source UE reports an SUI (SidelinkUEInformationNR, SUI) message to the gNB, where the SUI message is a first message. Specifically, there are the following several cases:
The serving base station of the source UE performs QoS split. In this case, the source UE needs to report an E2E QoS and an association relationship between an E2E unicast connection and a unicast connection on the link 1, and this is performed before step 0. The association relationship between the E2E unicast connection and the unicast connection on the link 1 is first indication information. The first indication information includes a device identifier of the relay UE, E2E QoS, and a device identifier, of the target UE, associated with the E2E QoS. In this implementation, the serving base station of the source UE may perform QoS split on the E2E QoS to obtain the QoS on the link 1 and the QoS on the link 2.

The source UE, the relay UE, or the serving base station of the relay UE performs QoS split. The source UE reports the E2E QoS and the QoS on the link 1, and optionally, further reports the QoS on the link 2. If the relay UE further sends the QoS information on the link 2 to the source UE in step 0, the source UE reports the QoS on the link 2 to the base station, or the source UE performs QoS split and then reports the QoS on the link 2 to the base station. In this case, the source UE reports the SUI in the following several manners:
Separate report: The E2E QoS is associated with L2 ID DST #2 of the target UE, the QoS on the link 1 is associated with L2 ID DST #1 of the relay UE, and a correspondence between DST #1 and DST #2 is further included. The correspondence enables the gNB to distinguish between the relay UE and the target UE, and further, distinguish between the E2E QoS and the QoS on the link 1 in the QoS information reported by the UE. In an implementation, it may be specified that a first reported DST ID is an L2 ID of the relay UE, and a subsequent DST ID is an L2 ID of the target UE connected to the relay UE. In this implementation, the first indication information includes the device identifier of the relay UE, the E2E QoS, and the device identifier, of the target UE, associated with the E2E QoS. The first indication information further includes the QoS on the link 1 and the device identifier, of the relay UE, associated with the QoS on the link 1.

Combined report: L2 ID DST#1 of the relay UE is associated with the QoS on the link 1 and a target UE list, and L2 ID DST#2 of the target UE is associated with the E2E QoS. In this manner, a correspondence between the relay UE and the target UE is implied. In this implementation, the first indication information includes the QoS on the link 1 and the device identifier, of the relay UE, associated with the QoS on the link 1, and the terminal device list, and the terminal device list includes the E2E QoS and the device identifier, of the target UE, associated with the E2E QoS.

In the reported SUI, DST #1 and DST #2 may correspond to a same QoS flow ID. In this case, a correspondence between the E2E QoS information and per-hop QoS information is associated based on the flow ID, and the correspondence between DST #1 and DST #2 is also implicitly indicated. DST #1 and DST #2 may alternatively correspond to different QoS flow IDs, and the correspondence between the E2E QoS information and the per-hop QoS information may be indicated in another manner, for example, in a sequential arrangement manner given that a quantity of QoS flows included in the E2E QoS information is the same as a quantity of QoS flows included in the per-hop QoS information.

Step 2: The base station determines two sets of SLRB configurations based on the E2E QoS and the QoS on the link 1, and delivers the two sets of SLRB configurations to the source UE. A specific configuration process is as follows:
The base station determines a set of SLRB configuration config#1 based on the E2E QoS, where the set of SLRB configuration config#1 includes an SDAP/PDCP configuration, and further includes a first identifier used to identify an E2E bearer. The first identifier may be SLRB-Uu-ConfigIndex, or may be a bearer ID, PC5-ConfigIndex, or an RLC channel ID. Based on a flow-SLRB mapping relationship in config #1, the base station determines QoS information at an RB granularity on the link 1 (if the flow IDs are different), namely, QoS that needs to be met by the E2E bearer on the link 1. The base station determines a set of SLRB configuration config#2 based on the QoS, where the set of SLRB configuration config#2 includes an RLC bearer configuration and also includes the first identifier.

Optionally, if the source UE sends data to a plurality of target UEs via the relay UE, the base station may map QoS flows respectively associated with the at least two target UEs to a same E2E bearer.

Optionally, QoS information at an RB granularity on the link 2 is further included, namely, QoS that needs to be met by the E2E bearer on the link 2. If the information reported by the source UE in step 1 includes the QoS on the link 2, the base station determines, based on the flow-SLRB mapping relationship in config #1, the QoS information at the RB granularity on the link 2. If the QoS on the link 2 is not reported in step 1, the base station determines the QoS on the link 2 based on the E2E QoS and the QoS on the link 1. For example, a delay in the QoS on the link 2 is obtained by subtracting a delay in the QoS on the link 1 from a delay in the E2E QoS, other parameters are consistent with those of the E2E QoS, and then the QoS information at the RB granularity on the link 2 is determined based on the flow-SLRB mapping relationship in config #1. Alternatively, if the base station performs QoS split, the base station determines the QoS information at the RB granularity on the link 2 based on the flow-SLRB mapping relationship in config #1. For determining the QoS information at the RB granularity on the link 2, refer to the related descriptions in the first manner of determining the configuration information. Details are not described herein again.

After receiving the first identifier, the source UE may determine a correspondence between the SDAP/PDCP configuration in config #1 and the RLC bearer configuration in config #2 based on the first identifier. In other words, an RLC channel on the link 1 corresponding to the E2E bearer may be determined based on the first identifier. If the base station maps flows of different target UEs to a same SLRB, after receiving the configuration, the source UE needs to separately establish PDCP entities corresponding to the target UEs, that is, establish a plurality of PDCP entities for one SLRB, and these different PDCP entities are mapped to a same RLC entity.

Step 3a: The source UE sends configuration information to the relay UE, where the configuration information includes the RLC bearer configuration on the link 1, and the configuration information is second information.

Optionally, the QoS at the RB granularity on the link 2 is further included. If the base station delivers the QoS at the RB granularity on the link 2 in step 2, the source UE sends the QoS to the relay UE; or if the base station does not deliver the QoS, the source UE determines the QoS information at the RB granularity on the link 2 based on the flow-SLRB mapping relationship, and sends the QoS information to the relay UE. The flow-SLRB mapping relationship is included in config #1, and after receiving the SLRB configuration sent by the base station, the source UE may obtain the mapping relationship.

Optionally, the flow-SLRB mapping relationship is further included. If the QoS at the RB granularity on the link 2 is not included, the flow-SLRB mapping relationship is sent to the relay UE, and the relay UE derives the QoS at the RB granularity on the link 2.

Step 3b: The source UE sends the SDAP/PDCP configuration information to the target UE via the relay UE, where the SDAP/PDCP configuration information carries the first identifier. The configuration information sent by the source UE is first information.

In this embodiment, in the U2U relay scenario, the gNB determines the two sets of configurations based on the E2E QoS and the per-hop QoS. After receiving the configuration information based on the first identifier, the UE can associate the E2E SDAP/PDCP configuration with the per-hop RLC bearer configuration, to avoid a problem that the UE cannot determine the RLC entity associated with the PDCP, so as to ensure normal operation of the system.

The source UE in the connected mode may also perform QoS split. In the reported SUI information, the E2E QoS information and the per-hop QoS information may be respectively associated with the L2 ID of the target UE and the L2 ID of the relay UE, or the relay UE may be associated with the target UE list, and then the L2 ID of the target UE is associated with the per-hop QoS information. In the reported SUI information, the QoS flow IDs corresponding to the relay UE and the target UE may be the same or may be different. After receiving the configuration delivered by the gNB, the source UE determines the correspondence between config #1 and config #2 based on the first identifier. The information sent by the source UE to the relay UE may carry the QoS information at the RB granularity on the link 2.

It should be noted that, in step 2 of this application, the base station determines the SLRB configuration in the first manner of determining the configuration information. config #1 includes the SDAP/PDCP configuration and the first identifier, and config #2 includes the RLC bearer configuration on the link 1.

In another implementation, the base station may alternatively determine the SLRB configuration in the second manner of determining the configuration information. Specifically, both config #1 determined by the base station based on the E2E QoS and config #2 determined by the base station based on the QoS on the link 1 are complete configurations, and first association information is the flow-SLRB mapping relationship. The base station sends complete config #1 and config #2 to the source UE. After receiving config #1 and config #2, the source UE may associate config #1 and config #2 based on the flow-SLRB mapping relationship, and intercept and combine the SDAP configuration and the PDCP configuration in config #1 and the RLC bearer configuration on the link 1 in config #2, to form a complete set of an SLRB configuration.

Another embodiment of this application provides a radio bearer configuration method, which is behavior of source UE in an idle/inactive/OoC mode.

A main difference from the embodiment shown in FIG. 8 is that the source UE determines a bearer configuration based on QoS information and an SIB/pre-config. Herein, an example in which a data direction is from source UE to target UE is used. FIG. 9 is a flowchart of determining a bearer configuration by source UE. In this embodiment, a first terminal device is source UE, a relay terminal device is relay UE, and a second terminal device is target UE.

As shown in FIG. 9, the radio bearer configuration method includes the following steps.

Step 0: The source UE obtains QoS information on a link 1 in the following several specific manners:
The source UE performs QoS split, to obtain the QoS information on the link 1. In other words, the UE in an idle/inactive/OoC mode performs QoS split.

The QoS information on the link 1 is received from the relay UE. To be specific, the relay UE or a serving base station of the relay UE performs QoS split, and sends the QoS information on the link 1 to the source UE. Optionally, QoS information on a link 2 may be further sent to the source UE.

Step 1: The source UE determines E2E and per-hop configuration information. A specific process is as follows:
Manner 1: Determine a set of SLRB configuration config#1 based on E2E QoS and an SIB/pre-config, where the set of SLRB configuration config#1 includes an SDAP/PDCP configuration, and further includes a first identifier used to identify an E2E bearer. The first identifier may be SLRB-Uu-ConfigIndex or may be a bearer ID, PC5-ConfigIndex, or an RLC channel ID. Based on a flow-SLRB mapping relationship in config #1, the source UE determines QoS information at an RB granularity on the link 1, namely, QoS that needs to be met by the E2E radio bearer on the link 1, and determines a set of SLRB configuration config #2 based on the QoS and the SIB/pre-config, where the set of SLRB configuration config #2 includes an RLC bearer configuration and the first identifier, so that the source UE can learn of a mapping relationship between the PDCP in config #1 and the RLC in config #2. When the UE is in the idle/inactive mode, the UE obtains the configuration information from the SIB. When the UE is in the OoC mode, the UE obtains the configuration information from pre-config.

The QoS information at the RB granularity on the link 1 is determined, that is, a QoS profile corresponding to an RB is determined based on a QoS profile corresponding to a QoS flow mapped to the RB. A specific implementation method of the process may be as follows:
QoS profile corresponding to a QoS flow with a highest priority in QoS flows mapped to the RB.
QoS profile corresponding to a QoS flow with a minimum packet delay budget (Packet Delay Budget, PDB) in the QoS flows mapped to the RB.
QoS profile corresponding to a QoS flow with a highest guaranteed flow bit rate (Guaranteed Flow Bit Rate, GFBR) in the QoS flows mapped to the RB.
QoS profile corresponding to a QoS flow with a minimum packet error rate (Packet Error Rate, PER) in QoS flows mapped to the RB.
QoS profiles that best meet requirements in a plurality of sets of QoS profile information corresponding to QoS flows mapped to an RB.

Average values of QoS profiles in a plurality of sets of QoS profile information corresponding to QoS flows mapped to an RB.

Optionally, QoS information at an RB granularity on the link 2 is further included, namely, QoS that needs to be met by the E2E bearer on the link 2. If the information sent by the relay UE in step 0 includes the QoS on the link 2, the base station determines, based on the flow-SLRB mapping relationship in config #1, the QoS information at the RB granularity on the link 2. If the QoS on the link 2 is not included in step 0, the source UE determines the QoS on the link 2 based on the E2E QoS and the QoS on the link 1. For example, a delay in the QoS on the link 2 is obtained by subtracting a delay in the QoS on the link 1 from a delay in the E2E QoS, other parameters are consistent with those of the E2E QoS, and then the QoS information at the RB granularity on the link 2 is determined based on the flow-SLRB mapping relationship in config #1. Alternatively, if the source UE performs QoS split, the source UE determines the QoS information at the RB granularity on the link 2 based on the flow-SLRB mapping relationship in config #1. The method for determining the QoS information at the RB granularity on the link 2 is similar to that for determining the QoS information at the RB granularity on the link 1.

Manner 2: In this manner, it is assumed that QoS split is performed in proportion. In this case, a proportional relationship between QoS profiles corresponding to E2E QoS flows is the same as a proportional relationship between QoS profiles corresponding to per-hop QoS flows. For example, a proportional relationship between a PDB corresponding to a flow 1 and a PDB corresponding to a flow 2 is 2:1. In this case, after the split, a proportional relationship between a PDB per hop corresponding to the flow 1 and a PDB per hop corresponding to the flow 2 is still 2:1. Based on the foregoing assumption, the source UE may directly determine config #1 and config #2 based on the E2E QoS and the per-hop QoS, which include the SDAP/PDCP/RLC bearer configuration. The flow-SLRB mapping relationship and the RLC bearer configuration part in config #1 are the same as those in config #2. Therefore, the source UE may determine a mapping relationship between the PDCP in config #1 and the RLC in config #2.

In Manner 2, the source UE intercepts and combines the SDAP configuration and the PDCP configuration in config #1 and the RLC bearer configuration on the link 1 in config #2, to form a complete set of an SLRB configuration.

Step 2a: The source UE sends configuration information to the relay UE, where the configuration information includes the RLC bearer configuration on the link 1, and the configuration information is second information.

Optionally, the QoS at the RB granularity on the link 2 is further included. If the QoS at the RB granularity on the link 2 is determined in step 1, the source UE sends the QoS to the relay UE.

Optionally, the flow-SLRB mapping relationship is further included. If the QoS at the RB granularity on the link 2 is not included, the flow-SLRB mapping relationship is sent to the relay UE.

Step 2b: The source UE sends the SDAP/PDCP configuration information to the target UE via the relay UE, where the SDAP/PDCP configuration information carries the first identifier, and the configuration information sent by the source UE is first information.

In this embodiment, in the U2U relay scenario, the source UE determines the two sets of configurations based on the E2E QoS and the per-hop QoS. The source UE can associate the E2E SDAP/PDCP configuration with the per-hop RLC bearer configuration based on the first identifier or the QoS flow, to avoid a problem that the UE cannot determine the RLC entity associated with the PDCP, so as to ensure normal operation of the system.

The source UE determines the E2E SDAP/PDCP configuration based on the E2E QoS, determines the per-hop RLC bearer configuration based on the per-hop QoS, and determines the correspondence between config #1 and config #2 based on the first identifier or the QoS flow. The information sent by the source UE to the relay UE may carry the QoS information at the RB granularity on the link 2.

Another embodiment of this application provides a radio bearer configuration method, which is behavior of relay UE in a connected mode.

In a UE to UE relay scenario, Tx UE needs to report QoS information to a gNB, and receive, from the gNB, an SL configuration used to send data. Herein, an example in which a data direction is from source UE to target UE is used. FIG. 10 is a flowchart of determining a bearer configuration on a second hop by a serving base station of relay UE. The Tx UE represents a relay terminal device. In this embodiment, a first terminal device is source UE, a relay terminal device is relay UE, a second terminal device is target UE, and a second network device is a serving base station of the relay UE, and is represented as a gNB or a base station.

As shown in FIG. 10, the radio bearer configuration method includes the following steps.

Step 0a: This step is optional. The relay UE obtains QoS information on a link 2 in the following several specific manners:
The relay UE performs QoS split, to obtain the QoS information on the link 2. In other words, in a connected mode, the UE also performs QoS split.

The QoS information on the link 2 is received from the gNB. To be specific, the serving base station of the relay UE performs QoS split, and sends the QoS information on the link 2 to the source UE. Optionally, the gNB may not send the QoS information, and in this case, the relay UE may not need to obtain QoS information on a link 1.

The QoS information on the link 2 is received from the source UE, that is, the source UE or a serving base station of the source UE performs QoS split, and sends the QoS information on the link 2 to the relay UE.

Step 0b: This step is optional. If the relay UE or the serving base station of the relay UE performs QoS split, the relay UE sends QoS information on a link 1 to the source UE; or if the source UE or the serving base station of the source UE performs QoS split, this step is not performed. Optionally, in this step, the relay UE may also notify the source UE of the QoS information on the link 2.

Step 0c: The relay UE receives configuration information sent by the source UE, where the configuration information is second information.

Step 1: The relay UE reports SUI, where the SUI message is a second message. Specifically, there are the following several cases:
1. If step 0c further includes QoS at an RB granularity on the link 2, the relay UE reports the QoS to the base station. In this implementation, the relay UE receives the QoS at the RB granularity on the link 2 from the source UE, and sends the QoS at the RB granularity on the link 2 to the base station. The base station may directly determine an RLC bearer configuration on the link 2 based on the QoS at the RB granularity on the link 2.
2. If step 0c further includes a flow-SLRB mapping relationship, the relay UE reports the mapping relationship to the base station. In this implementation, the relay UE receives the flow-SLRB mapping relationship from the source UE, and sends the mapping relationship to the base station. The base station may determine QoS at an RB granularity on the link 2 based on the mapping relationship and the QoS on the link 2, and determine an RLC bearer configuration on the link 2 based on the QoS at the RB granularity on the link 2.
3. If step 0c further includes a flow-SLRB mapping relationship, the relay UE determines QoS information at an RB granularity on the link 2 based on the mapping relationship, and reports the QoS information to the base station. For a specific method for determining the QoS information at the RB granularity on the link 2, refer to Embodiment 2. In this implementation, the relay UE receives the flow-SLRB mapping relationship from the source UE. The relay UE determines the QoS at the RB granularity on the link 2 based on the mapping relationship and the QoS on the link 2, and sends the QoS at the RB granularity on the link 2 to the base station. The base station may directly determine an RLC bearer configuration on the link 2 based on the QoS at the RB granularity on the link 2.

Optionally, the SUI further includes the QoS information on the link 2. If the relay UE, the source UE, or the serving base station of the source UE performs QoS split, the gNB does not have the QoS information on the link 2, and the relay UE reports the QoS information on the link 2 to the base station; or if the serving base station of the relay UE performs QoS split, before step 0a, the relay UE has reported E2E QoS information and an association relationship between a unicast connection on the link 1 and a unicast connection on the link 2, and after performing QoS split, the serving base station of the relay UE obtains the QoS on the link 1 and the link 2. For the case 1, the relay UE may not report the QoS information on the link 2 given that the gNB may determine the bearer configuration on the link 2 based on the QoS at the RB granularity without additional information.

Step 2: The base station determines the RLC bearer configuration on the link 2 based on the QoS at the RB granularity on the link 2, and delivers the RLC bearer configuration to the relay UE, where the RLC bearer configuration includes a first identifier. For the case 2, the base station determines the QoS at the RB granularity on the link 2 based on the flow-SLRB mapping relationship, and then determines the configuration based on the QoS information. After receiving the configuration information, the relay UE may determine a mapping relationship between an E2E SLRB and the RLC bearer on the link 2 based on the first identifier. In other words, an RLC channel on the link 2 corresponding to the E2E bearer may be determined based on the first identifier.

Step 3: The relay UE sends configuration information to the target UE, where the configuration information includes the RLC bearer configuration on the link 2, and the configuration information is third information.

It should be noted that the foregoing procedure uses the data direction from the source UE to the target UE as an example. When the data direction is from the target UE to the source UE, the target UE or a serving base station of the target UE performs QoS split in a direction from the target UE to the source UE, or the relay UE or the serving base station of the relay UE performs QoS split in the direction from the target UE to the source UE, that is, the QoS split is directional. In addition, when the data direction is from the target UE to the source UE, the relay UE also obtains configurations in the direction from the target UE to the source UE, including a configuration used to receive data from the target UE and a configuration used to send data to the source UE, that is, the relay UE separately maintains the configuration in the direction from the source UE to the target UE and the configuration in the direction from the target UE to the source UE.

In this embodiment, in the U2U relay scenario, the serving base station of the relay UE determines the RLC bearer configuration on the link 2 based on the QoS information at the RB granularity. After receiving the configuration information, the relay UE can associate the E2E SLRB with the RLC bearer configuration on the link 2 based on the first identifier, to ensure that a corresponding second-hop RLC channel can be found based on the radio bearer of data during subsequent data forwarding.

The relay UE in the connected mode may alternatively perform QoS split. The reported SUI information may include the QoS information at the RB granularity on the link 2, or may include the flow-SLRB mapping relationship. After receiving the configuration delivered by the gNB, the relay UE determines the correspondence between the E2E SLRB and the RLC channel based on the first identifier. Considering directionality of the QoS split and the configurations, the relay UE separately obtains the configuration in the direction from the source UE to the target UE and the configuration in the direction from the target UE to the source UE.

Another embodiment of this application provides a radio bearer configuration method, which is behavior of relay UE in an idle/inactive/OoC mode.

A main difference from the previous embodiment is that the relay UE determines a bearer configuration based on QoS information and an SIB/pre-config. Herein, an example in which a data direction is from source UE to target UE is used. FIG. 11 is a flowchart of determining a bearer configuration by relay UE. In this embodiment, a first terminal device is source UE, a relay terminal device is relay UE, and a second terminal device is target UE.

As shown in FIG. 11, the radio bearer configuration method includes the following steps.

Step 0a: The relay UE obtains QoS information on a link 2 in the following several specific manners:
The relay UE performs QoS split, to obtain the QoS information on the link 2. In other words, the UE in an idle/inactive/OoC mode performs QoS split.

The QoS information on the link 2 is received from the source UE, that is, the source UE or a serving base station of the source UE performs QoS split, and sends the QoS information on the link 2 to the relay UE.

Step 0b: This step is optional. If the relay UE or the serving base station of the relay UE performs QoS split, the relay UE sends QoS information on a link 1 to the source UE; or if the source UE or the serving base station of the source UE performs QoS split, this step is not performed. Optionally, in this step, the relay UE may also notify the source UE of the QoS information on the link 2.

Step 0c: The relay UE receives configuration information sent by the source UE, where the configuration information is second information.

Step 1: The relay UE determines configuration information on the link 2. Specifically, there are the following several cases:
1. If step 0c further includes QoS at an RB granularity on the link 2, the relay UE determines the configuration information on the link 2 based on the QoS information and the SIB/pre-config, where the configuration information includes a first identifier and an RLC bearer configuration on the link 2. The relay UE may determine a mapping relationship between an E2E SLRB and the RLC bearer on the link 2 based on the first identifier. When the UE is in the idle/inactive mode, the UE obtains the configuration information from the SIB. When the UE is in the OoC mode, the UE obtains the configuration information from pre-config.
2. If step 0c further includes a flow-DRB mapping relationship, the relay UE determines QoS information at an RB granularity on the link 2 based on the mapping relationship. For a specific method, refer to Embodiment 2. The relay UE then determines the configuration information on the link 2 based on the QoS information and the SIB/pre-config, where the configuration information includes a first identifier, and an RLC bearer configuration on the link 2. The relay UE may determine a mapping relationship between an E2E SLRB and the RLC bearer on the link 2 based on the first identifier.

Step 2: The relay UE sends configuration information to the target UE, where the configuration information includes the RLC bearer configuration on the link 2, and the configuration information is third information.

It should be noted that the foregoing procedure uses the data direction from the source UE to the target UE as an example. When the data direction is from the target UE to the source UE, the target UE or a serving base station of the target UE performs QoS split in a direction from the target UE to the source UE, or the relay UE or the serving base station of the relay UE performs QoS split in the direction from the target UE to the source UE, that is, the QoS split is directional. In addition, when the data direction is from the target UE to the source UE, the relay UE also obtains configurations in the direction from the target UE to the source UE, including a configuration used to receive data from the target UE and a configuration used to send data to the source UE, that is, the relay UE separately maintains the configuration in the direction from the source UE to the target UE and the configuration in the direction from the target UE to the source UE.

In this embodiment, in the U2U relay scenario, the relay UE determines the RLC bearer configuration on the link 2 based on the QoS information at the RB granularity. The relay UE can associate the E2E SLRB with the RLC channel on the link 2 based on the first identifier, to ensure that a corresponding second-hop RLC channel can be found based on the radio bearer of data during subsequent data forwarding.

The relay UE determines the RLC bearer configuration on the link 2 based on the QoS information at the RB granularity, and determines the correspondence between the E2E SLRB and the RLC channel on the link 2 based on the first identifier. Considering directionality of the QoS split and the configurations, the relay UE separately obtains the configuration in the direction from the source UE to the target UE and the configuration in the direction from the target UE to the source UE.

The radio bearer configuration method provided in embodiments of this application may be applied to a wireless communication system. For the wireless communication system, refer to FIG. 5. The wireless communication system includes the terminal device 101 and the network device 102.

The terminal device 101 shown above may be user equipment (user equipment, UE), a terminal (terminal), an access terminal, a terminal unit, a terminal station, a mobile station (mobile station, MS), a remote station, a remote terminal, a mobile terminal (mobile terminal), a wireless communication device, a terminal agent, a terminal device, or the like. The terminal device 101 may alternatively be a communication chip having a communication module, may be a vehicle having a communication function, or a vehicle-mounted device (for example, a vehicle-mounted communication apparatus or a vehicle-mounted communication chip), or the like. The terminal device 101 may have a wireless transceiver function. The terminal device 101 can perform communication (for example, wireless communication) with one or more network devices in one or more communication systems, and accepts a network service provided by the network device. The network device herein includes but is not limited to the network device 102 shown in the figure.

The terminal device 101 may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, or another processing device connected to a wireless modem, a vehicle-mounted device, a wearable device, a terminal apparatus in a future 5G network, a terminal apparatus in a further evolved PLMN, or the like.

The terminal device 101 may be specifically a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal device 101 may be deployed on land, including an indoor terminal device or an outdoor terminal device, a handheld terminal device; or a vehicle-mounted terminal device; the terminal device 101 may be deployed on a water surface (for example, on a ship); or the terminal device 101 may be deployed in air (for example, on an airplane, a balloon, or a satellite).

The network device 102 may be an access network device (or referred to as an access network site). The access network device is a device that provides a network access function, for example, a radio access network (radio access network, RAN) base station. The network device 102 may specifically include a base station (base station, BS), or include a base station, a radio resource management device configured to control the base station, and the like. The network device 102 may alternatively include a relay station (relay device), an access point, a base station or an NR base station in a 5G network, a base station in a future evolved PLMN, or the like. The network device 102 may be a wearable device or a vehicle-mounted device. Alternatively, the network device 102 may be a communication chip having a communication module.

For example, the network device 102 includes but is not limited to: a gNodeB (gNodeB, gNB) in 5G, an evolved NodeB (evolved NodeB, eNB) in a long term evolution (long term evolution, LTE) system, a radio network controller (radio network controller, RNC), a radio controller in a cloud radio access network (cloud radio access network, CRAN) system, a base station controller (base station controller, BSC), a home base station (for example, a home evolved NodeB or home NodeB, HNB), a baseband unit (baseband unit, BBU), a transmitting and receiving point (transmitting and receiving point, TRP), a transmitting point (transmitting point, TP), a mobile switching center, a base transceiver station (base transceiver station, BTS) in a global system for mobile communications (global system for mobile communications, GSM) or code division multiple access (code division multiple access, CDMA) network, a NodeB (node base station, NB) in wideband code division multiple access (wideband code division multiple access, WCDMA), an evolved (evolved) NB (eNB or eNodeB) in LTE, a base station device in a future 5G network, an access network device in a future evolved PLMN, a wearable device, or a vehicle-mounted device.

In some deployments, the network device may include a central unit (central unit, CU) and a distributed unit (distributed unit, DU). The network device may further include an active antenna unit (active antenna unit, AAU). The CU implements some functions of the network device, and the DU implements some other functions of the network device. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

In addition, the network device 102 may be connected to a core network (core network, CN) device, and the core network device may be configured to provide a core network service for the access network device 102 and the terminal device 101. The core network device may correspond to different devices in different systems. For example, in 3G, the core network device may correspond to a serving general packet radio service (general packet radio service, GPRS) support node (serving GPRS support node, SGSN) and/or a gateway GPRS support node (gateway GPRS Support Node, GGSN). In 4G, the core network device may correspond to a mobility management entity (mobility management entity, MME) and/or a serving gateway (serving gateway, S-GW). In 5G, the core network device may correspond to an access and mobility management function (access and mobility management function, AMF), a session management function (session management function, SMF), or a user plane function (user plane function, UPF).

It should be understood that the foregoing wireless communication system is applicable to both a low frequency scenario (sub 6G) and a high frequency scenario (above 6G). An application scenario of the wireless communication system includes but is not limited to an existing communication system like a 5th generation (5G) system or a new radio (new radio, NR) communication system, a future evolved public land mobile network (public land mobile network, PLMN) system, or the like.

For ease of description, in embodiments of this application, an example in which the terminal device is UE and the network device is a base station is used.

In embodiments provided in this application, the methods provided in embodiments of this application are separately described from perspectives of the network device, the terminal device, and interaction between the network device and the terminal device. To implement functions in the method provided in embodiments of this application, the network device and the terminal device may include a hardware structure and/or a software module, and implement the functions in a form of the hardware structure, the software module, or a combination of the hardware structure and the software module. Whether a function in the functions is performed by the hardware structure, the software module, or the combination of the hardware structure and the software module depends on particular applications and design constraints of the technical solutions.

FIG. 12 is a diagram of a structure of a possible communication apparatus according to an embodiment of this application. The communication apparatuses may implement a function of the terminal device or the network device in the foregoing method embodiments. Therefore, beneficial effect of the foregoing method embodiments can also be implemented. In this embodiment of this application, the communication apparatus may be the terminal device 101 shown in FIG. 5, may be the network device 102 shown in FIG. 5, or may be a module (for example, a chip) used in the terminal device or the access network device.

The communication apparatus shown in FIG. 12 includes a transceiver module 1001 and a processing module 1002. The communication apparatus may be configured to implement a function of the terminal device or the network device in the method embodiments shown in the foregoing embodiments.

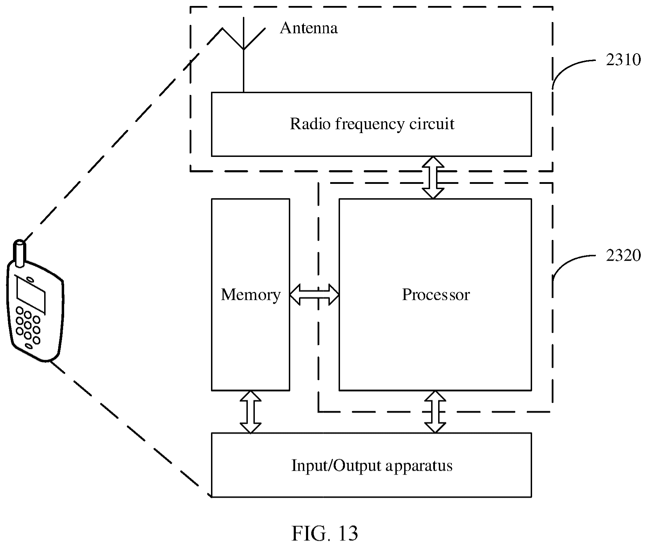

When the communication apparatus is the terminal device, FIG. 13 is a simplified diagram of a structure of the terminal device. For ease of understanding and illustration, FIG. 13 uses an example in which the terminal device is a mobile phone. As shown in FIG. 13, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user. It should be noted that some types of terminal devices may not have an input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, only one memory and one processor are shown in FIG. 13. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the terminal device (the transceiver unit may be one functional unit, and the functional unit can implement a sending function and a receiving function; or the transceiver unit may include two functional units: a receiving unit that can implement a receiving function and a sending unit that can implement a sending function), and the processor having a processing function may be considered as a processing unit of the terminal device. As shown in FIG. 13, the terminal device includes a transceiver unit 2310 and a processing unit 2320. The transceiver unit may alternatively be referred to as a transceiver, a transceiver machine, a transceiver apparatus, or the like. The processing unit may also be referred to as a processor, a processing board, a processing module, a processing apparatus, or the like. Optionally, a component for implementing the receiving function in the transceiver unit 2310 may be considered as a receiving unit, and a component for implementing the sending function in the transceiver unit 2310 may be considered as a sending unit. In other words, the transceiver unit 2310 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like.

It should be understood that the transceiver unit 2310 is configured to perform a sending operation and a receiving operation of the terminal device in the foregoing method embodiments, and the processing unit 2320 is configured to perform an operation other than the sending and receiving operations of the terminal device in the foregoing method embodiments.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

When the apparatus in this embodiment of this application is a network device, the apparatus may be as shown in FIG. 14. The apparatus may include one or more radio frequency units, such as a remote radio unit (remote radio unit, RRU) 2410 and one or more baseband units (baseband unit, BBU) (which may also be referred to as a digital unit (digital unit, DU)) 2420. The RRU 2410 may be referred to as a transceiver module. The transceiver module may include a sending module and a receiving module, or the transceiver module may be a module that can implement sending and receiving functions. Optionally, the transceiver module may also be referred to as a transceiver, a transceiver circuit, or the like, and may include at least one antenna 2411 and a radio frequency unit 2412. The RRU 2410 is mainly configured to: receive and send radio frequency signals, and perform conversion between a radio frequency signal and a baseband signal. The BBU 2410 is mainly configured to perform baseband processing, control a base station, and the like. The RRU 2410 and the BBU 2420 may be physically disposed together, or may be physically separated, that is, in a distributed base station.

The BBU 2420 is a control center of the base station, may also be referred to as a processing module, and is mainly configured to implement baseband processing functions such as channel encoding, multiplexing, modulation, and spectrum spreading. For example, the BBU (processing module) may be configured to control the base station to perform an operation procedure related to the network device in the foregoing method embodiments.

In an example, the BBU 2420 may include one or more boards, and a plurality of boards may jointly support a radio access network (for example, an LTE network) of a single access standard, or may separately support radio access networks (for example, an LTE network, a 5G network, or another network) of different access standards. The BBU 2420 further includes a memory 2421 and a processor 2422. The memory 2421 is configured to store necessary instructions and necessary data. The processor 2422 is configured to control the base station to perform a necessary action, for example, configured to control the base station to perform an operation procedure related to the network device in the foregoing method embodiments. The memory 2421 and the processor 2422 may serve one or more boards. In other words, a memory and a processor may be disposed on each board. Alternatively, a plurality of boards may share a same memory and a same processor. In addition, a necessary circuit may further be disposed on each board.

An embodiment of this application provides a communication system. The communication system may include the terminal device and the network device in the embodiment shown in FIG. 1. Optionally, the terminal device and the network device in the communication system may perform the radio bearer configuration method provided in the method embodiments of this application.

An embodiment of this application further provides a computer-readable storage medium. The computer-readable storage medium stores a computer program. When the computer program is executed by a computer, the computer may implement a procedure related to the terminal device or the network device in any one of the foregoing method embodiments.

An embodiment of this application further provides a computer program product. The computer program product is configured to store a computer program. When the computer program is executed by a computer, the computer may implement a procedure related to the terminal device or the network device in any one of the foregoing method embodiments.

An embodiment of this application further provides a chip or a chip system. The chip may include a processor, and the processor may be configured to invoke a program or instructions in a memory, to perform a procedure related to the terminal device or the network device in any one of the foregoing method embodiments. The chip system may include the chip, and may further include another component like a memory or a transceiver.

An embodiment of this application further provides a circuit. The circuit may be coupled to a memory, and may be configured to perform a procedure related to the terminal device or the network device in any one of the foregoing method embodiments. A chip system may include a chip, and may further include another component like a memory or a transceiver.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) is integrated into the processor.

It should be noted that the memory described in this specification aims to include but is not limited to these memories and any memory of another proper type.

It should be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

A person of ordinary skill in the art may be aware that, modules and algorithm steps in the examples described with reference to embodiments disclosed in this specification can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed radio bearer configuration method and apparatus may be implemented in other manners. For example, the described apparatus embodiment is merely an example. For example, division into the modules is merely logical function division and may be other division in an actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The modules described as separate components may or may not be physically separate, and components displayed as modules may or may not be physical modules, may be located in one position, or may be distributed on a plurality of network units. Some or all of the units may be selected based on actual requirements to achieve the objectives of the solutions of embodiments.

In addition, functional modules in embodiments of this application may be integrated into one processing module, each of the modules may exist alone physically, or two or more modules are integrated into one module.

When the functions are implemented in the form of a software functional module and sold or used as an independent product, the functions may be stored in a computer-readable storage medium. Based on such an understanding, the technical solutions of this application essentially, or the part that makes a contribution, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The computer-readable storage medium may be any usable medium that can be accessed by a computer. For example, the computer-readable medium may include but is not limited to: a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, or another optical disc storage or a disk storage medium, or another magnetic storage device, or any other medium that can carry or store expected program code in a form of an instruction or a data structure and that can be accessed by a computer.

A network architecture and a service scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and emergence of new service scenarios, the technical solutions provided in embodiments of this application are also applicable to similar technical problems.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A radio bearer configuration method, applied to a first terminal device, wherein the method comprises:
obtaining configuration information, wherein the configuration information comprises first configuration information and second configuration information, the first configuration information and the second configuration information comprise first association information, and the first association information indicates an association relationship between the first configuration information and the second configuration information; and
determining, based on the first association information, a first channel corresponding to a first radio bearer, wherein the first radio bearer is a radio bearer that is between the first terminal device and a second terminal device and that is determined based on the first configuration information, the first channel is determined based on the second configuration information and is used to transmit the first radio bearer through a first communication interface, the first communication interface is a communication interface between the first terminal device and a relay terminal device, and the first terminal device sends data to the second terminal device via the relay terminal device.

2. The method according to claim 1, wherein the first configuration information and the second configuration information are determined based on first quality of service QoS information and/or second QoS information;
the first QoS information is a QoS profile corresponding to a first QoS flow, and the first QoS flow is a QoS flow between the first terminal device and the second terminal device; and
the second QoS information is a QoS profile that is determined based on the first QoS information and that needs to be met on the first communication interface.

3. The method according to claim 2, wherein the second QoS information is a QoS profile that the first radio bearer needs to meet on the first communication interface.

4. The method according to claim 2 or 3, wherein the method further comprises:
sending a first message to a first network device, wherein the first message comprises at least the first QoS information and first indication information, and the first indication information indicates that the first terminal device communicates with the second terminal device via the relay terminal device.

5. The method according to claim 4, wherein the first indication information comprises:
a device identifier of the relay terminal device, the first QoS information, and a device identifier, of the second terminal device, associated with the first QoS information.

6. The method according to claim 5, wherein the first indication information further comprises:
the second QoS information and a device identifier, of the relay terminal device, associated with the second QoS information.

7. The method according to claim 4, wherein the first indication information comprises:
the second QoS information, a device identifier, of the relay terminal device, associated with the second QoS information, and a terminal device list, wherein the terminal device list comprises the first QoS information and a device identifier, of the second terminal device, associated with the first QoS information.

8. The method according to any one of claims 4, 6, and 7, wherein the first message further comprises at least one of the following:
the second QoS information, third QoS information, or an identifier of the first QoS flow associated with the relay terminal device and an identifier of the first QoS flow associated with the second terminal device, wherein
the third QoS information is a QoS profile that is determined based on the first QoS information and that needs to be met on a second communication interface, and the second communication interface is a communication interface between the relay terminal device and the second terminal device; and
the identifier of the first QoS flow associated with the relay terminal device is the same as the identifier of the first QoS flow associated with the second terminal device.

9. The method according to any one of claims 4, 6, and 7, wherein the method further comprises:
performing QoS split on the first QoS information, to obtain the second QoS information and/or third QoS information; or
receiving the second QoS information and/or the third QoS information sent by the relay terminal device, wherein
the third QoS information is a QoS profile that is determined based on the first QoS information and that needs to be met on a second communication interface, and the second communication interface is a communication interface between the relay terminal device and the second terminal device.

10. The method according to any one of claims 1 to 9, wherein the method further comprises: sending first information to the second terminal device via the relay terminal device, wherein the first information comprises the first association information.

11. The method according to any one of claims 1 to 10, wherein the method further comprises:
sending fourth QoS information or a mapping relationship between the first QoS flow and the first radio bearer to the relay terminal device, wherein the first QoS flow is the QoS flow between the first terminal device and the second terminal device; and
the fourth QoS information is a QoS profile that the first radio bearer needs to meet on the second communication interface, and the second communication interface is the communication interface between the relay terminal device and the second terminal device.

12. The method according to any one of claims 1 to 11, wherein the first association information is any one of the following: an index of a sidelink configuration, an identifier obtained through mapping based on an index of a sidelink configuration, a sidelink radio bearer SLRB identifier, or a radio link control RLC channel identifier.

13. A radio bearer configuration method, applied to a first network device, wherein the method comprises:
receiving a first message sent by a first terminal device;
determining configuration information based on the first message, wherein the configuration information comprises first configuration information and second configuration information, the first configuration information and the second configuration information comprise first association information, the first association information indicates an association relationship between the first configuration information and the second configuration information, the first configuration information is used to determine a first radio bearer, the first radio bearer is a radio bearer between the first terminal device and a second terminal device, the second configuration information is used to determine a first channel, the first channel is used to transmit the first radio bearer through a first communication interface, the first communication interface is a communication interface between the first terminal device and a relay terminal device, and the first terminal device sends data to the second terminal device via the relay terminal device; and
sending the configuration information to the first terminal device.

14. The method according to claim 13, wherein the first configuration information and the second configuration information are determined based on first quality of service QoS information and/or second QoS information;
the first QoS information is a QoS profile corresponding to a first QoS flow, and the first QoS flow is a QoS flow between the first terminal device and the second terminal device; and
the second QoS information is a QoS profile that is determined based on the first QoS information and that needs to be met on the first communication interface.

15. The method according to claim 14, wherein the second QoS information is a QoS profile that the first radio bearer needs to meet on the first communication interface.

16. The method according to claim 14 or 15, wherein the first message comprises at least the first QoS information and first indication information, and the first indication information indicates that the first terminal device communicates with the second terminal device via the relay terminal device.

17. The method according to claim 16, wherein the first indication information comprises:
a device identifier of the relay terminal device, the first QoS information, and a device identifier, of the second terminal device, associated with the first QoS information.

18. The method according to claim 17, wherein the first indication information further comprises:
the second QoS information and a device identifier, of the relay terminal device, associated with the second QoS information.

19. The method according to claim 16, wherein the first indication information comprises:
the second QoS information, a device identifier, of the relay terminal device, associated with the second QoS information, and a terminal device list, wherein the terminal device list comprises the first QoS information and a device identifier, of the second terminal device, associated with the first QoS information.

20. The method according to any one of claims 14 to 16, 18, and 19, wherein the first message further comprises at least one of the following:
the second QoS information, third QoS information, or an identifier of the first QoS flow associated with the relay terminal device and an identifier of the first QoS flow associated with the second terminal device, wherein
the third QoS information is a QoS profile that is determined based on the first QoS information and that needs to be met on a second communication interface, and the second communication interface is a communication interface between the relay terminal device and the second terminal device; and
the identifier of the first QoS flow associated with the relay terminal device is the same as the identifier of the first QoS flow associated with the second terminal device.

21. The method according to any one of claims 13 to 20, wherein the first association information is any one of the following: an index of a sidelink configuration, an identifier obtained through mapping based on an index of a sidelink configuration, a sidelink radio bearer SLRB identifier, or a radio link control RLC channel identifier.

22. A radio bearer configuration method, applied to a relay terminal device, wherein the method comprises:
obtaining first association information; and
determining, based on the first association information, a second channel corresponding to a first radio bearer, wherein the first radio bearer is a radio bearer between a first terminal device and a second terminal device, the second channel is used to transmit the first radio bearer through a second communication interface, the second communication interface is a communication interface between the relay terminal device and the second terminal device, and the first terminal device sends data to the second terminal device via the relay terminal device.

23. The method according to claim 22, wherein obtaining the first association information comprises:
obtaining third configuration information, wherein the third configuration information comprises the first association information, and the third configuration information is used to determine the second channel.

24. The method according to claim 23, wherein the first association information is any one of the following: an index of a sidelink configuration, an identifier obtained through mapping based on an index of a sidelink configuration, a sidelink radio bearer SLRB identifier, or a radio link control RLC channel identifier.

25. The method according to claim 23 or 24, wherein the third configuration information is determined based on fourth quality of service QoS information, and the fourth QoS information is a QoS profile that the first radio bearer needs to meet on the second communication interface.

26. The method according to claim 25, wherein the method further comprises:
sending a second message to a second network device, wherein the second message comprises the fourth QoS information or a mapping relationship between a first QoS flow and the first radio bearer, and the first QoS flow is a QoS flow between the first terminal device and the second terminal device.

27. The method according to claim 26, wherein the method further comprises:
receiving the fourth QoS information or the mapping relationship between the first QoS flow and the first radio bearer that is sent by the first terminal device.

28. The method according to claim 26, wherein the second message further comprises third QoS information, and the third QoS information is a QoS profile that the first QoS flow needs to meet on the second communication interface.

29. A radio bearer configuration method, applied to a second network device, wherein the method comprises:
receiving a second message sent by a relay terminal device;
determining third configuration information based on the second message, wherein the third configuration information comprises first association information, the third configuration information is used to determine a second channel, the second channel is used to transmit a first radio bearer through a second communication interface, the second communication interface is a communication interface between the relay terminal device and a second terminal device, the first radio bearer is a radio bearer between a first terminal device and the second terminal device, and the first terminal device sends data to the second terminal device via the relay terminal device; and
sending the third configuration information to the relay terminal device.

30. The method according to claim 29, wherein the first association information is any one of the following: an index of a sidelink configuration, an identifier obtained through mapping based on an index of a sidelink configuration, a sidelink radio bearer SLRB identifier, or a radio link control RLC channel identifier.

31. The method according to claim 29 or 30, wherein the third configuration information is determined based on fourth quality of service QoS information, and the fourth QoS information is a QoS profile that the first radio bearer needs to meet on the second communication interface.

32. The method according to claim 31, wherein the second message comprises the fourth QoS information or a mapping relationship between a first QoS flow and the first radio bearer, and the first QoS flow is a QoS flow between the first terminal device and the second terminal device.

33. The method according to claim 32, wherein the second message further comprises third QoS information, and the third QoS information is a QoS profile that the first QoS flow needs to meet on the second communication interface.

34. A communication apparatus, comprising a module configured to perform the method according to any one of claims 1 to 12, 13 to 21, 22 to 28, or 29 to 33.

35. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus, and the processor is configured to: by using a logic circuit or by executing code instructions:
obtain configuration information, wherein the configuration information comprises first configuration information and second configuration information, the first configuration information and the second configuration information comprise first association information, and the first association information indicates an association relationship between the first configuration information and the second configuration information; and
determine, based on the first association information, a first channel corresponding to a first radio bearer, wherein the first radio bearer is a radio bearer that is between the first terminal device and a second terminal device and that is determined based on the first configuration information, the first channel is determined based on the second configuration information and is used to transmit the first radio bearer through a first communication interface, the first communication interface is a communication interface between the first terminal device and a relay terminal device, and the first terminal device sends data to the second terminal device via the relay terminal device.

36. The communication apparatus according to claim 35, wherein the first configuration information and the second configuration information are determined based on first quality of service QoS information and/or second QoS information;
the first QoS information is a QoS profile corresponding to a first QoS flow, and the first QoS flow is a QoS flow between the first terminal device and the second terminal device; and
the second QoS information is a QoS profile that is determined based on the first QoS information and that needs to be met on the first communication interface.

37. The communication apparatus according to claim 36, wherein the second QoS information is a QoS profile that the first radio bearer needs to meet on the first communication interface.

38. The communication apparatus according to claim 36 or 37, wherein the processor is further configured to:
send a first message to a first network device, wherein the first message comprises at least the first QoS information and first indication information, and the first indication information indicates that the first terminal device communicates with the second terminal device via the relay terminal device.

39. The communication apparatus according to claim 38, wherein the first indication information comprises:
a device identifier of the relay terminal device, the first QoS information, and a device identifier, of the second terminal device, associated with the first QoS information.

40. The communication apparatus according to claim 39, wherein the first indication information further comprises:
the second QoS information and a device identifier, of the relay terminal device, associated with the second QoS information.

41. The communication apparatus according to claim 38, wherein the first indication information comprises:
the second QoS information, a device identifier, of the relay terminal device, associated with the second QoS information, and a terminal device list, wherein the terminal device list comprises the first QoS information and a device identifier, of the second terminal device, associated with the first QoS information.

42. The communication apparatus according to any one of claims 38, 40, and 41, wherein the first message further comprises at least one of the following:
the second QoS information, third QoS information, or an identifier of the first QoS flow associated with the relay terminal device and an identifier of the first QoS flow associated with the second terminal device, wherein
the third QoS information is a QoS profile that is determined based on the first QoS information and that needs to be met on a second communication interface, and the second communication interface is a communication interface between the relay terminal device and the second terminal device; and
the identifier of the first QoS flow associated with the relay terminal device is the same as the identifier of the first QoS flow associated with the second terminal device.

43. The communication apparatus according to any one of claims 38, 40, and 41, wherein the processor is further configured to:
perform QoS split on the first QoS information, to obtain the second QoS information and/or third QoS information; or
receive the second QoS information and/or the third QoS information sent by the relay terminal device, wherein
the third QoS information is a QoS profile that is determined based on the first QoS information and that needs to be met on a second communication interface, and the second communication interface is a communication interface between the relay terminal device and the second terminal device.

44. The communication apparatus according to any one of claims 35 to 43, wherein the processor is further configured to:
send first information to the second terminal device via the relay terminal device, wherein the first information comprises the first association information.

45. The communication apparatus according to any one of claims 35 to 44, wherein the processor is further configured to:
send fourth QoS information or a mapping relationship between the first QoS flow and the first radio bearer to the relay terminal device, wherein the first QoS flow is the QoS flow between the first terminal device and the second terminal device; and
the fourth QoS information is a QoS profile that the first radio bearer needs to meet on the second communication interface, and the second communication interface is the communication interface between the relay terminal device and the second terminal device.

46. The communication apparatus according to any one of claims 35 to 45, wherein the first association information is any one of the following: an index of a sidelink configuration, an identifier obtained through mapping based on an index of a sidelink configuration, a sidelink radio bearer SLRB identifier, or a radio link control RLC channel identifier.

47. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus, and the processor is configured to: by using a logic circuit or by executing code instructions:
receive a first message sent by a first terminal device;
determine configuration information based on the first message, wherein the configuration information comprises first configuration information and second configuration information, the first configuration information and the second configuration information comprise first association information, the first association information indicates an association relationship between the first configuration information and the second configuration information, the first configuration information is used to determine a first radio bearer, the first radio bearer is a radio bearer between the first terminal device and a second terminal device, the second configuration information is used to determine a first channel, the first channel is used to transmit the first radio bearer through a first communication interface, the first communication interface is a communication interface between the first terminal device and a relay terminal device, and the first terminal device sends data to the second terminal device via the relay terminal device; and
send the configuration information to the first terminal device.

48. The communication apparatus according to claim 47, wherein the first configuration information and the second configuration information are determined based on first quality of service QoS information and/or second QoS information;
the first QoS information is a QoS profile corresponding to a first QoS flow, and the first QoS flow is a QoS flow between the first terminal device and the second terminal device; and
the second QoS information is a QoS profile that is determined based on the first QoS information and that needs to be met on the first communication interface.

49. The communication apparatus according to claim 48, wherein the second QoS information is a QoS profile that the first radio bearer needs to meet on the first communication interface.

50. The communication apparatus according to claim 48 or 49, wherein the first message comprises at least the first QoS information and first indication information, and the first indication information indicates that the first terminal device communicates with the second terminal device via the relay terminal device.

51. The communication apparatus according to claim 50, wherein the first indication information comprises:
a device identifier of the relay terminal device, the first QoS information, and a device identifier, of the second terminal device, associated with the first QoS information.

52. The communication apparatus according to claim 51, wherein the first indication information further comprises:
the second QoS information and a device identifier, of the relay terminal device, associated with the second QoS information.

53. The communication apparatus according to claim 50, wherein the first indication information comprises:
the second QoS information, a device identifier, of the relay terminal device, associated with the second QoS information, and a terminal device list, wherein the terminal device list comprises the first QoS information and a device identifier, of the second terminal device, associated with the first QoS information.

54. The communication apparatus according to any one of claims 48 to 50, 52, and 53, wherein the first message further comprises at least one of the following:
the second QoS information, third QoS information, or an identifier of the first QoS flow associated with the relay terminal device and an identifier of the first QoS flow associated with the second terminal device, wherein
the third QoS information is a QoS profile that is determined based on the first QoS information and that needs to be met on a second communication interface, and the second communication interface is a communication interface between the relay terminal device and the second terminal device; and
the identifier of the first QoS flow associated with the relay terminal device is the same as the identifier of the first QoS flow associated with the second terminal device.

55. The communication apparatus according to any one of claims 47 to 54, wherein the first association information is any one of the following: an index of a sidelink configuration, an identifier obtained through mapping based on an index of a sidelink configuration, a sidelink radio bearer SLRB identifier, or a radio link control RLC channel identifier.

56. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus, and the processor is configured to: by using a logic circuit or by executing code instructions:
obtain first association information; and
determine, based on the first association information, a second channel corresponding to a first radio bearer, wherein the first radio bearer is a radio bearer between a first terminal device and a second terminal device, the second channel is used to transmit the first radio bearer through a second communication interface, the second communication interface is a communication interface between the relay terminal device and the second terminal device, and the first terminal device sends data to the second terminal device via the relay terminal device.

57. The communication apparatus according to claim 56, wherein obtaining the first association information comprises:
obtaining third configuration information, wherein the third configuration information comprises the first association information, and the third configuration information is used to determine the second channel.

58. The communication apparatus according to claim 57, wherein the first association information is any one of the following: an index of a sidelink configuration, an identifier obtained through mapping based on an index of a sidelink configuration, a sidelink radio bearer SLRB identifier, or a radio link control RLC channel identifier.

59. The communication apparatus according to claim 57 or 58, wherein the third configuration information is determined based on fourth quality of service QoS information, and the fourth QoS information is a QoS profile that the first radio bearer needs to meet on the second communication interface.

60. The communication apparatus according to claim 59, wherein the processor is further configured to:
send a second message to a second network device, wherein the second message comprises the fourth QoS information or a mapping relationship between a first QoS flow and the first radio bearer, and the first QoS flow is a QoS flow between the first terminal device and the second terminal device.

61. The communication apparatus according to claim 60, wherein the processor is configured to:
receive the fourth QoS information or the mapping relationship between the first QoS flow and the first radio bearer that is sent by the first terminal device.

62. The communication apparatus according to claim 60, wherein the second message further comprises third QoS information, and the third QoS information is a QoS profile that the first QoS flow needs to meet on the second communication interface.

63. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus, and the processor is configured to: by using a logic circuit or by executing code instructions:
receive a second message sent by a relay terminal device;
determine third configuration information based on the second message, wherein the third configuration information comprises first association information, the third configuration information is used to determine a second channel, the second channel is used to transmit a first radio bearer through a second communication interface, the second communication interface is a communication interface between the relay terminal device and a second terminal device, the first radio bearer is a radio bearer between a first terminal device and the second terminal device, and the first terminal device sends data to the second terminal device via the relay terminal device; and
send the third configuration information to the relay terminal device.

64. The communication apparatus according to claim 63, wherein the first association information is any one of the following: an index of a sidelink configuration, an identifier obtained through mapping based on an index of a sidelink configuration, a sidelink radio bearer SLRB identifier, or a radio link control RLC channel identifier.

65. The communication apparatus according to claim 63 or 64, wherein the third configuration information is determined based on fourth quality of service QoS information, and the fourth QoS information is a QoS profile that the first radio bearer needs to meet on the second communication interface.

66. The communication apparatus according to claim 65, wherein the second message comprises the fourth QoS information or a mapping relationship between a first QoS flow and the first radio bearer, and the first QoS flow is a QoS flow between the first terminal device and the second terminal device.

67. The communication apparatus according to claim 66, wherein the second message further comprises third QoS information, and the third QoS information is a QoS profile that the first QoS flow needs to meet on the second communication interface.

68. A computer-readable storage medium, wherein the computer-readable storage medium stores a computer program, and when the computer program is run, the method according to any one of claims 1 to 12, 13 to 21, 22 to 28, or 29 to 33 is implemented.

69. A computer program product, wherein the computer program product comprises computer program code, and when the computer program code is run, the method according to any one of claims 1 to 12, 13 to 21, 22 to 28, or 29 to 33 is implemented.

70. A communication system, wherein the communication system comprises a first terminal device configured to perform the method according to any one of claims 1 to 12, a relay terminal device configured to perform the method according to any one of claims 22 to 28, and a second terminal device.
